# EUROPÄISCHE PATENTSCHRIFT

(11) **EP 3 025 474 B1**
(45) Veröffentlichungstag und Bekanntmachung des Hinweises auf die Patenterteilung: **08.04.2020**
(21) Anmeldenummer: 14735468.2
(22) Anmeldetag: 18.06.2014
(51) Int. Cl.: H04L 29/06, G06F 21/32, G06F 21/34, G06F 21/35, H04B 5/00, H04W 4/80, H04W 12/06, H04W 92/18, H04W 12/00

(54) **EXTERNE SICHERE EINHEIT**
EXTERNAL SECURE UNIT
UNITÉ EXTERNE SÛRE

(30) Priorität: 25.07.2013 DE 102013012339
(43) Veröffentlichungstag der Anmeldung: 01.06.2016
(73) Patentinhaber: Giesecke+Devrient Mobile Security GmbH, 81677 München (DE)
(72) Erfinder: SCHRÖDER, Sönke, 80637 München (DE)
(86) Internationale Anmeldenummer: PCT/EP2014/001693
(87) Internationale Veröffentlichungsnummer: WO 2015/010758

(56) Entgegenhaltungen:
- EP-A1- 2 597 723
- WO-A1-2011/006791
- WO-A1-2013/034681
- WO-A1-2013/089777
- WO-A2-2014/186559
- DE-U1- 9 320 743

## Beschreibung

Die vorliegende Erfindung beschreibt eine externe sichere Einheit, dessen Aufbau, Herstellung und Anwendung.

WO 2013/089777 A1 zeigt ein Kommunikationsverfahren, wobei ein mobiles Endgerät, beispielsweise in Form eines Smartphones, Anwendung findet.

WO 2013/034681 A1 zeigt ein mobiles Endgerät aufweisend eine spulenförmige Antenne.

Aus dem Stand der Technik ist insbesondere eine Technologie bekannt, damit mobile Kommunikationsgeräte, z.B. Mobiltelefone, Smartphones, Tablet-PC's, etc. über z.B. NFC eine Kommunikationsverbindung mit einem anderen Kommunikationsteilnehmer aufbauen und durchführen können. Ein Anwendungsbeispiel ist dafür eine Authentisierung und Freigabe von Diensten insbesondere durch im mobilen Kommunikationsgerät gespeicherte Identitäten, wobei vorzugsweise zur Speicherung von Identitäten sogenannte sichere Einheiten, z.B. SIM-Karten zur Anwendung kommen. Ferner sind aus dem Stand der Technik auch entsprechende Anwendungen bezüglich der RFID-Technologie bekannt.

Identitäten, z.B. kryptologische Schlüssel bzw. Daten zur Authentisierung für z.B. Dienste im Internet werden entweder in einer sicheren Einheit, z.B. einer MikroSD, SIM oder einer Trusted Execution Environment TEE oder in einem ungesicherten Speicher eines Mobiltelefons gespeichert. Bei Verlust des Mobiltelefons oder einem unerlaubten Zugang zu einer sicheren Einheit können insbesondere die Daten zur Identität, Schlüsseldaten, Zugangsdaten etc. verloren gehen, ausspioniert oder unerlaubt verwendet werden. Um sich hier vor einem Missbrauch zu schützen, werden die vorher genannten Daten in der Regel mit z.B. einem Passwort oder einer PIN geschützt. Insbesondere PIN und Passwort haben den Nachteil, dass ein Benutzer sich nur eine begrenzte Anzahl unterschiedlicher PIN-und/oder Passwort-Kombinationen merken kann. Dies führt oft dazu, dass entweder immer das gleiche Passwort oder nur sehr einfache Passwörter verwendet werden. Beide Varianten sind sehr unsicher.

Darüber hinaus besteht die Möglichkeit, dass eine sichere Einheit, wie z.B. Smart Cards oder damit in Verbindung stehende Mobiltelefone vergessen oder verloren werden.

Ausgehend von den Nachteilen des Stands der Technik besteht die Aufgabe für die vorliegende Erfindung eine Lösung zu finden, welche die Nachteile des Stands der Technik überwindet.

Die Aufgabe der Erfindung wird durch den unabhängigen Anspruch gelöst. Vorteilhafte Ausführungen sind in den abhängigen Ansprüchen beschrieben.

Zur Lösung der Aufgabe offenbart die Erfindung ein Verfahren zum Betrieb einer externen sicheren Einheit, welche mindestens
- einen Speicher zum Speichern von Daten,
- einen Prozessor zum Verarbeiten der Daten,
- mindestens eine Schnittstelle, um Daten von einem Kommunikationsgerät zu empfangen oder an dieses zu senden, umfasst,
   wobei das Kommunikationsgerät mindestens
- einen Speicher zum Speichern mindestens eines Anwendungsprogrammes,
- einen Prozessor zum Verarbeiten und Ausführen des Anwendungsprogrammes,
- mindestens eine erste Schnittstelle, um Daten an die externe sichere Einheit zu senden oder von dieser zu empfangen,
- mindestens eine zweite Schnittstelle, um Daten an ein Übertragungsnetzwerk zu senden oder von diesem zu empfangen, umfasst,
wobei sich das Verfahren dadurch auszeichnet, dass
für die Ausführung des Anwendungsprogrammes im Kommunikationsgerät notwendige sicherheitsrelevante Daten in der externen sicheren Einheit gespeichert sind und das Kommunikationsgerät zur Ausführung des Anwendungsprogramms die sicherheitsrelevanten Daten von der externen sicheren Einheit anfordert. Als ein externes sicheres Element kann vorteilhafterweise z.B. ein Fingerring, ein M2M-Modul, eine SIM-Karte, eine Chipkarte mit kontaktloser und/oder kontaktgebundener Schnittstelle etc. verwendet werden. Ferner kann vorteilhafterweise als Kommunikationsgerät z.B. ein Mobiltelefon, Smartphone, Terminal für Bankanwendungen, Notebook etc. verwendet werden.

Ein vorteilhaftes Ausführungsbeispiel der Erfindung ist, dass die externe sichere Einheit einem Objekt zugeordnet ist, mit dem die externe sichere Einheit fest verbunden wird.

Ein weiteres vorteilhaftes Ausführungsbeispiel der Erfindung ist, dass mindestens einem Anwendungsprogramm in Abhängigkeit von seiner Anwendung eine Sicherheitsstufe zugeordnet wird.

Ein weiteres vorteilhaftes Ausführungsbeispiel der Erfindung ist, dass zwischen dem Kommunikationsgerät und der externen sicheren Einheit Daten kontaktlos übertragen werden.

Ein weiteres vorteilhaftes Ausführungsbeispiel der Erfindung ist, dass die externe sichere Einheit mindestens zwei unterschiedliche kontaktlose Schnittstellen verwendet, um Daten zu senden oder zu empfangen.

Ein weiteres vorteilhaftes Ausführungsbeispiel der Erfindung ist, dass die externe sichere Einheit als Schnittstelle eine NFC-Schnittstelle zur Kommunikation mit dem Kommunikationsgerät verwendet. Das Kommunikationsgerät verwendet in diesem Fall ebenfalls eine NFC-Schnittstelle zur Kommunikation.

Ein weiteres vorteilhaftes Ausführungsbeispiel der Erfindung ist, dass die externe sichere Einheit zwei- und/ oder dreidimensional angeordnete Antennen zur Kommunikation mit dem Kommunikationsgerät verwendet.

Ein weiteres vorteilhaftes Ausführungsbeispiel der Erfindung ist, dass die externe sichere Einheit ein Vibrationselement verwendet. Damit kann die externe sichere Einheit mittels Vibration ein Signal erzeugen, wenn z.B. eine Transaktion erfolgreich ausgeführt wurde.

Ein weiteres vorteilhaftes Ausführungsbeispiel der Erfindung ist, dass die externe sichere Einheit einen Schalter verwendet. Beispielsweise kann der Schalter verwendet werden, um zwischen mindestens zwei Betriebsmoden umzuschalten.

Ein weiteres vorteilhaftes Ausführungsbeispiel der Erfindung ist, dass die externe sichere Einheit ein Anzeigeelement verwendet, um z.B. eine Mitteilung an einen Benutzer auszugeben.

Ein weiteres vorteilhaftes Ausführungsbeispiel der Erfindung ist, dass die externe sichere Einheit zum Schutz gegen Fälschung mindestens ein Sicherheitsmerkmal verwendet. Das mindestens eine Sicherheitsmerkmal kann z.B. auf einer Außenfläche der externen sicheren Einheit angeordnet sein. Als Sicherheitsmerkmal kann z.B. ein bekanntes Sicherheitsmerkmal aus dem Banknotendruck verwendet werden, das z.B. fluoresziert.

Ein weiteres vorteilhaftes Ausführungsbeispiel der Erfindung ist, dass die externe sichere Einheit einen Sensor zur Erfassung von biometrischen Merkmalen verwendet. Vorteilhafterweise lassen so z.B. auch Fingerabdrücke erfassen.

Ein weiteres vorteilhaftes Ausführungsbeispiel der Erfindung ist, dass die externe sichere Einheit einen Sensor verwendet, um Fingervenen zu erkennen. Dies hat den Vorteil, dass die externe sichere Einheit anhand der Fingervenen bestimmen kann, ob der Benutzer autorisiert ist, um z.B. eine Anwendung auszuführen.

Ein weiteres vorteilhaftes Ausführungsbeispiel der Erfindung ist, dass die externe sichere Einheit mindestens einen Prozessor verwendet. Zur Erhöhung der Rechenleistung können vorteilhafterweise auch mehrere Prozessoren verwendet werden.

Ein weiteres vorteilhaftes Ausführungsbeispiel der Erfindung ist, dass die externe sichere Einheit einen Energiespeicher verwendet.

Ein weiteres vorteilhaftes Ausführungsbeispiel der Erfindung ist, dass die externe sichere Einheit ein Fingerring ist, welcher aus mindestens zwei Komponenten besteht, wobei in mindestens eine Komponente eine Elektronikkomponente eingesetzt wird. Dies hat den Vorteil, dass die externe sichere Einheit ständig mitgeführt werden kann. Ein Vergessen z.B. am Arbeitsplatz wird damit ausgeschlossen, da es sich immer am Körper befindet.

Ein weiteres vorteilhaftes Ausführungsbeispiel der Erfindung ist, dass der Fingerring aus einem streifenförmigen Material besteht, wobei das Material zu einem Ring geformt ist.

Ein weiteres vorteilhaftes Ausführungsbeispiel der Erfindung ist, dass ein NFC-Modul in den Ring eingesetzt wird, wobei das NFC-Modul auswechselbar ist.

Ein weiteres vorteilhaftes Ausführungsbeispiel der Erfindung ist, dass als Objekt eine Person oder ein Gegenstand verwendet wird. Die externe sichere Einheit kann somit vorteilhaft als Fingerring ausgeführt werden, so dass Personen es einfach mitführen können. Eine andere vorteilhafte Möglichkeit ist, dass die externe sichere Einheit z.B. für Kraftfahrzeuge als M2M-SIM ausgeführt wird, damit sie immer mit dem Kraftfahrzeug fest verbunden werden kann.

Ein weiteres vorteilhaftes Ausführungsbeispiel der Erfindung ist, dass als Kommunikationsgerät ein Mobiltelefon verwendet wird.

Ein weiteres vorteilhaftes Ausführungsbeispiel der Erfindung ist, dass als Übertragungssystem ein Mobilfunknetzwerk verwendet wird.

Zur Lösung der Aufgabe offenbart die Erfindung ferner eine externe sichere Einheit, welches eingerichtet ist, um ein Verfahren wie oben beschrieben auszuführen.

Zur Lösung der Aufgabe offenbart die Erfindung ferner ein Verfahren zur Herstellung einer externen sicheren Einheit, welche eingerichtet ist, um ein Verfahren wie oben beschrieben auszuführen.

Zur Lösung der Aufgabe offenbart die Erfindung ferner ein System, welches aus mindestens einer sicheren Einheit gemäß der obigen Beschreibung und mindestens einem Kommunikationsgerät besteht.

Ein vorteilhaftes Ausführungsbeispiel der Erfindung ist, dass als Kommunikationsgerät ein Mobiltelefon für das System verwendet wird.

Im Folgenden wird die Erfindung anhand der beigefügten Figuren detailliert beschrieben.
Figur 1 zeigt die prinzipielle Struktur der Erfindung am Beispiel eines Fingerrings als externe sichere Einheit und eines Smartphones als Kommunikationsgeräts.
Figur 2 zeigt einen Querschnitt durch einen erfindungsgemäßen Ring als ein Ausführungsbeispiel für eine externe sichere Einheit.
Figur 3 zeigt einen erfindungsgemäßen Fingerring mit einem einsetzbaren Chipmodul mit einer Abdeckung.
Figur 4 zeigt einen Längsschnitt durch einen Fingerring als Beispiel für eine externe sichere Einheit.
Figur 5 zeigt einen zu Figur 4 entsprechenden Querschnitt des Fingerrings.
Figuren 6 bis 10 zeigen unterschiedliche Querschnitte durch einen Fingerring.

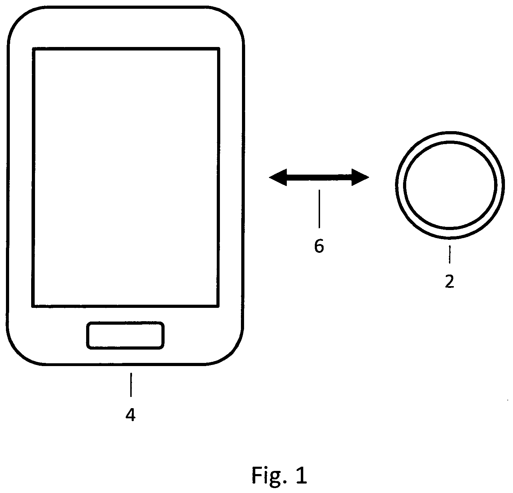

Figur 1 zeigt die prinzipielle Struktur der Erfindung am Beispiel eines Fingerrings 2 als externe sichere Einheit 2 und eines Smartphones als Kommunikationsgerät 4. Die Erfindung offenbart ein Verfahren zur Authentisierung mittels des Fingerrings 2 und des Smartphones 4. Der Fingerring 2 wird von einem Benutzer z.B. permanent am Finger getragen. Der Benutzer hat die Möglichkeit die im Fingerring 2 gespeicherten Daten selbst zu verwalten, z.B. mittels eines Web-Portals. Der Fingerring 2 und das Smartphone 4 sind z.B. über eine kontaktlose Kommunikationsverbindung 6, z.B. eine NFC-Verbindung, miteinander verbunden. Der Fingerring 2 wird mit dem Smartphone 4 über eine geeignete Applikation verbunden, die auf dem Smartphone 4 ausgeführt wird. Die Applikation auf dem Smartphone 4 enthält keine sicherheitsrelevanten Daten. Alle sicherheitsrelevanten Daten, welche zur Ausführung von Applikationen auf dem Smartphone 4 notwendig sind, sind nur auf dem Fingerring 2 gespeichert. Der Fingerring 2 stellt die benötigten sicherheitsrelevanten Daten auf Anforderung des Smartphones 4 bereit. Der Fingerring 2 weist dazu alle notwendigen Vorrichtungen auf, wie einen Prozessor mit einem Speicher und den geeigneten Schnittstellen, z.B. eine Antennenspule 8, um mit dem Smartphone 4 eine Kommunikationsverbindung 6 aufzubauen und zu betreiben. Auf dem Fingerring 2 sind alle sicherheitsrelevanten Daten wie z.B. Identitäten für einen Zugang zu z.B. Email, Facebook, Google, Twitter, Amazon, Internetdienste, Banking, Payment, Transit, etc., sowie kryptologische Schlüssel, z.B. PKI, oder Zugangsidentitäten gespeichert. Der Fingerring 2 als externe sichere Einheit 2 ist vorteilhafterweise so ausgebildet, dass er nicht unbefugt entwendet, verwendet oder verloren gehen kann, da er als Ring am Finger getragen wird. Für eine Kommunikationsverbindung 6 zwischen Fingerring 2 und Smartphone 4 bietet sich eine kontaktlose Kommunikationsverbindung z.B. eine NFC-Verbindung an. Es ist aber jede andere geeignete Kommunikationstechnologie ebenfalls möglich.

Vorteilhafterweise werden im Smartphone 4 die vorhandenen Anwendungen nach einem Sicherheitslevel eingruppiert. Das geringste Sicherheitslevel haben beispielsweise Internetdienste oder Zugänge ohne zusätzliche Passwortabfrage, bei denen die Vorlage der externen sicheren Einheit 2 zur Identifikation ausreicht. Einen höheren Sicherheitslevel haben z.B. Zugänge, bei denen sowohl die externe sichere Einheit 2 als auch ein Passwort als Zugang z.B. zum Firmen-PC notwendig sind. Einen hohen Sicherheitslevel haben z.B. Dienste für Banking oder Payment im Internet, bei denen z.B. neben der externen sicheren Einheit 2 eine von der externen sicheren Einheit 2 erzeugte TAN-Nummer angegeben werden muss. Je nach Sicherheitslevel der Anwendung kann z.B. zusätzlich eine PIN- oder Passwortabfrage stattfinden.

Auf dem Smartphone 4 ist eine Anwendung gespeichert, welche über verschiedene vorzugsweise kontaktlose Schnittstellen mit der externen sicheren Einheit 2 kommuniziert und notwendige Daten von der externen sicheren Einheit 2 abruft. Vorzugsweise findet zwischen Fingerring 2 und Smartphone 4 eine verschlüsselte Datenübertragung 6 statt.

Eine der externen sicheren Einheit 2 zugeordnete Anwendung kann entweder direkt aus dem Menü des Smartphones oder indirekt durch eine andere ausgewählte Anwendung, welche Daten von der externen sicheren Einheit 2 benötigt, gestartet werden.

Es können mit der vorliegenden Erfindung nahezu beliebig viele Identitäten in der externen sicheren Einheit 2 gespeichert und verwaltet werden. Es können sichere Passwörter verwendet werden, ohne dass der Benutzer sich diese merken muss. Das Smartphone 4 kann beispielsweise solange gesperrt sein, bis der Fingerring 2 das Smartphone 4 wieder entsperrt. Insbesondere durch die Ausgestaltung der externen sicheren Einheit 2 als Fingerring 2 ergibt sich für den Benutzer eine einfache Handhabung, da sich das Smartphone 4 während der Benutzung in der Nähe des Fingerrings 2 befindet. Ferner ist es möglich unter Verwendung von kryptologischen Verfahren auch alle sich auf dem Smartphone 4 gespeicherten Daten zu verschlüsseln und zu sichern.

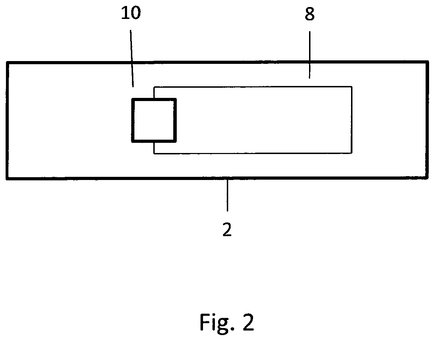

Figur 2 zeigt einen Querschnitt durch einen erfindungsgemäßen Fingerring 2 als ein Ausführungsbeispiel für eine externe sichere Einheit 2. Im Fingerring 2 befindet sich eine Antennenspule 8 und ein Chip oder ein Chipmodule 10, welche prinzipiell angedeutet sind.

Smartcards können allgemein leicht vergessen oder verloren werden bzw. sind durch ihre steigende Anzahl für einen Benutzer lästig. Bekannte Fingerringe bzw. Armbänder mit RFID-Funktion werden lediglich zur Identifikation verwendet, jedoch nicht mit weiteren Diensten verbunden. RFID-Armbänder und entsprechende Uhren können zur Authentisierung bei einem Kommunikationsgerät nur schlecht verwendet werden, da sie üblicherweise außerhalb der Reichweite eines NFC-Lesegerätes sind. RFID-Ringe bzw. RFID-Tags mit einer üblichen ringförmigen Antenne können kaum verwendet werden, da die Koppellage der Antennen zwischen einem RFID-Fingerring und einem RFID-Lesegerät bei Verwendung eines Kommunikationsgeräts sehr ungünstig ist, da es sich um eine orthogonale Anordnung handelt, wenn der Benutzer das Kommunikationsgerät in der Hand hält.

Es gilt folglich die oben genannten Probleme hinsichtlich Reichweite und Koppellage zu lösen.

Zur Lösung der Probleme schlägt die Erfindung deshalb vor eine Antennenspule 8 für eine erste Frequenz, z.B. für eine NFC-Anwendung, sowie ein Chipmodul 10, welches optional auch eine Antennenspule für eine zweite Frequenz hat, in die externe sichere Einheit 2, z.B. den Fingerring 2 zu integrieren und das Chipmodul 10 mit der ersten Antennenspule 8 elektrisch leitend zu verbinden. Alternativ können weitere Antennenspulen für weitere Frequenzen vorhanden sein. Bei der Antennenspule 8 kann es sich um eine ringförmige Antennenspule handeln, die in einer Seitenfläche des Fingerrings 2 angeordnet ist. Vorzugsweise wird die Antennenspule 8 in einer Unterseite des Fingerrings 2 angeordnet, um einen geringen Abstand zu einem Kommunikationsgerät 4, z.B. Smartphone, zu erreichen. Ferner kann die Antennenspule 8 orthogonal zum Fingerring 2 angeordnet werden. Die Antennenspule 8 kann als Helmholtzantenne ausgebildet sein, wobei die dazu gehörende Antennenspulen gegenüberliegend in den Seitenflächen des Fingerrings 2 angeordnet sind. Vorzugsweise werden die Antennenspulen der Helmholtzantenne sowohl auf der dem Benutzer zugewandten Seite als auch der dem Benutzer abgewandten Seite des Fingerrings 2 angeordnet. Eine andere Möglichkeit ist, dass die Antennenspule 8 als Toroid- Antenne in der Seitenfläche, vorzugsweise in einer dem Benutzer abgewandten Seite des Fingerrings 2 angeordnet wird. Als weitere Alternative kann die Antennenspule 8 auch als Dipol-Antenne ausgeführt werden. Optional kann zur Verstärkung der Wirkung der Antennenspule 8 ein ferromagnetisches Element in der Antennenspule 8 angeordnet werden. Ferner ist es möglich, dass die Antennenspule 8 für die erste Frequenz mit der Antennenspule für die zweite Frequenz auf dem Chipmodul 10 verbunden wird um z.B. eine Reichweitenerhöhung zu erzielen oder um eine Sende-/Empfangsantenne für eine andere Frequenz zur Verfügung zu stellen. Ferner kann zwischen den Antennen für die erste und die zweite Frequenz eine induktive Kopplung durchgeführt werden.

Allgemein kann die Antennenspule 8 in jedem beliebigen Winkel zur Außenseite des Fingerrings 2 angeordnet werden. Die Antennenspule 8 kann räumlich sowohl zwei- als auch dreidimensional im Fingerring 2 angeordnet werden. Neben der Antennenspule 8 kann mindestens eine weitere Antenne im Fingerring 2 angeordnet sein.

Mehrere in einem beliebigen Winkel, z.B. orthogonal, zueinander angeordnete Antennenspulen 8 verbessern eine Kopplung zwischen einem Lesegerät und der bzw. den jeweiligen Antennenspulen 8. Beispielsweise können zwei oder drei Antennenspulen 8 orthogonal zueinander angeordnet werden.

Im Folgenden werden Beispiele für zwei orthogonal zueinander angeordnete Antennenspulen 8 beschrieben. Es handelt sich hierbei z.B. um eine ringförmige Antenne und eine Helmholtz-Antenne, die orthogonal zueinander angeordnet sind. Alternativ kann eine Helmholtz-Antenne an den äußeren Rändern des Fingerrings 2 angeordnet sein, wobei eine weitere Helmholtz-Antenne orthogonal dazu angeordnet ist. Ein anderes Beispiel dafür ist die Anordnung aus einer Toroid-Antenne und einer orthogonal dazu angeordneten Helmholtz-Antenne. Ein weiteres Beispiel ist eine Dipol-Antenne mit einer dazu orthogonal angeordneten Ring-Antenne.

Beispiele für drei orthogonal zueinander angeordnete Antennen werden im Folgenden beschrieben. Ein erstes Beispiel ist eine ringförmige Antenne und zwei Helmholtz-Antennen in orthogonaler Anordnung. Ein weiteres Beispiel ist eine Helmholtz-Antenne, welche an den Enden des Fingerrings 2 bzw. an dessen äußeren Rändern angeordnet ist, und zwei Helmholtz-Antennen in orthogonaler Anordnung. Ferner können auch eine Toroid-Antenne und zwei Helmholtz-Antennen orthogonal zueinander angeordnet werden.

Darüber hinaus sind alle anderen geeigneten Kombinationen der zuvor genannten Antennenformen möglich.

Wie bereits oben beschrieben, kann die Reichweite der Antennenspule 8 bzw. Antennenkombination erhöht werden, indem mindestens ein ferromagnetisches Element mit der Antennenspule 8 kombiniert wird.

Die Antennenspule 8 kann optional mittels kapazitiver Elemente abgestimmt werden.

Vorteilhaft an einem Aufbau von drei orthogonal zueinander angeordneten Antennenspulen 8 ist, dass dieser Aufbau in mindestens zwei Koppellagen verwendet werden kann.

Allgemein gilt, dass die Antennenspule 8 bzw. die Antennenkombinationen parallel oder seriell mit dem Chipmodul 10 elektrisch verbunden sind. Vorteilhafterweise weist das Chipmodul 10 eine elektronische Schaltung auf, welche jeweils die Antennenspule 8 mit der besten Koppellage zu einem aktuellen Lesegerät auswählt. Ferner weist das Chipmodul 10 eine elektronische Schaltung auf, um Antennenspulen 8 mit entgegen gesetzter Kopplung zu diskriminieren oder ggf. z.B. mittels eines Gleichrichters umzupolen, um eine Verstärkung der Kopplung zu erreichen.

Der große Vorteil der oben beschriebenen Maßnahmen ist, dass der Fingerring 2 im Feld eines Lesegerätes unabhängig von seiner räumlichen Lage erkannt werden kann.

Damit der Fingerring 2 bzw. allgemein die externe sichere Einheit 2 eine höhere und/oder eine sicherere Datenübertragungsrate und/oder eine größere Reichweite zu einem Lesegerät erreicht, wird vorgeschlagen, dass die externe sichere Einheit 2 bzw. hier der Fingerring 2 mehrere Schnittstellen zur Datenübertragung aufweist und verwendet.

Beispielsweise erfolgt die Stromversorgung und evtl. auch die initiale Erfassung eines NFC-Fingerrings 2 wie üblich über ein elektromagnetisches Feld eines Lesegeräts. Um einen höheren Datendurchsatz zu erreichen bzw. eine Manipulation durch einen Man-in-the-middle-Angriff zu unterbinden bzw. deutlich zu erschweren, soll der folgende Datenaustausch, z.B. über eine im Fingerring 2 sowie im Leser integrierte Infrarotdiode erfolgen. Die Infrarotdiode muss ggf. mittels einer elektronischen Schaltung mit dem Chipmodul 10 verbunden werden. Eine Protokollumschaltung von NFC auf eine Infrarotübertragung erfolgt z.B. mittels NFC, wenn ein Lesegerät und ein NFC-Fingerring 2 dies unterstützen. Alternative kontaktlose Schnittstellen sind z.B. NFC, WLAN, Bluetooth, Zigbee, UHF, etc., wobei das Chipmodul 10 das jeweilige Protokoll unterstützen muss. Ferner muss eine entsprechend geeignete Antennenspule 8 in den Fingerring 2 bzw. die externe sichere Einheit 2 integriert werden. Alternativ zu den kontaktlosen Schnittstellen können sich an der Oberfläche des Fingerrings 2 kontaktbehaftete Schnittstellen befinden, wie z.B. gemäß ISO 7816, SPI, USB, etc.

Ferner kann durch Integration von Schnittstellen, welche von dem Kommunikationsgerät 4 nicht unterstützt werden, in den Fingerring 2 ein Funktionsumfang des Kommunikationsgeräts 4 erweitert werden. Somit läuft eine Kommunikation vom Kommunikationsgerät 4 über den Fingerring 2 mit der entsprechenden Schnittstelle zu dem Gerät mit der entsprechenden gegenüberliegenden Schnittstelle und zurück.

Vorteilhaft daran ist, dass wirkungsvoll Man-in-the-middle-Angriffe verhindert werden können. Die Datenübertragung kann durch eine parallele Verwendung von mindestens zwei Schnittstellen erhöht werden. Ferner können weitere oder alternative Schnittstellen für eine anwendungsspezifische Verwendung bereitgestellt werden. Ferner kann die Anzahl und technische Vielfalt der verfügbaren Schnittstellen eines Kommunikationsgeräts 4, wie z.B. eines Smartphones, erweitert werden.

Um dem Benutzer der externen sicheren Einheit 2, z.B. in Form des Fingerrings 2, eine taktile Rückmeldung, z.B. eine Bestätigung, über eine Aktion der externen sicheren Einheit 2 zu geben, ist es möglich ein Vibrationselement in der externen sicheren Einheit 2 bzw. hier im Fingerring 2 zu integrieren. Das Vibrationselement ist dazu mit dem Chipmodul 10 elektrisch leitend verbunden. Das Vibrationselement kann entweder in der externen sicheren Einheit 2, hier im Fingerring 2 oder auf dem Chipmodul 10 angeordnet sein. Die Energieversorgung erfolgt über ein elektromagnetisches Feld eines Lesegeräts, in dessen Feld sich die externe sichere Einheit 2 befindet.

Im Folgenden werden Anwendungsbeispiele für das Vibrationselement beschrieben.

Am Anfang einer Aktivierung der externen sicheren Einheit 2 soll das Vibrationselement z.B. einmal vibrieren. Dies kann beispielsweise zum Zeitpunkt der Inbetriebnahme sein, wenn ein elektromagnetisches Feld eines Lesegeräts vorhanden ist. Am Ende einer Aktivierung soll das Vibrationselement ein zweites Mal ein gegebenenfalls unterschiedliches Signal erzeugen, z.B. zwei kurze Impulse. Ferner kann z.B. bei einer veränderten Anzeige eines Terminals ein weiterer kurzer Impuls erzeugt werden. Der Einsatz des Vibrationselements bietet sich beispielsweise für länger dauernde Aktionen an, wie z.B. eine Bargeldauszahlung an einem Terminal oder für Mobile-Banking bzw. -Payment.

Für schnelle Aktionen, wie z.B. im Transitbereich oder für einen Zutritt ohne ein Terminalmenu, reicht beispielsweise eine einzige Folge von kurzen Impulsen aus, z.B. drei kurze Vibrationsimpulse.

Den jeweiligen Anwendungen oder gegebenenfalls auch deren Zuständen, z.B. Fehler, Bestätigung, etc., können unterschiedliche bzw. benutzerindividuelle Vibrationsimpulse zugeordnet werden.

Ferner kann eine Rückmeldung eines Codes zur Verifikation oder als ein O-ne-Time-Password OTP oder als eine PIN für Aktionen mittels einer Impulsfolge ausgegeben werden, z.B. dreimal kurz, einmal lang, zweimal kurz, zweimal lang, etc.

Da ein Benutzer die externe sichere Einheit 2 z.B. den Fingerring 2 direkt am Körper trägt, erkennt er direkt, wann eine Aktion z.B. erfolgt, bzw. beendet ist. Zudem können anhand verschiedener Vibrationsimpulse unterschiedliche Aktionen unterschieden werden. Insbesondere für Transit-Anwendungen, d.h. Anwendungen ohne hohe Sicherheit, jedoch mit Bedarf an Schnelligkeit, hat das Verfahren seine Vorteile durch die hohe Benutzerfreundlichkeit insbesondere im Vergleich zu Smartcards.

Um eine Funktion einer externen sicheren Einheit 2, z.B. eines Fingerrings 2, zu verändern, wird ein Betätigungselement, z.B. ein Schalter oder ein Taster in die externe sichere Einheit 2 integriert. Das Betätigungselement wird vorzugsweise an der Oberfläche der externen sicheren Einheit 2 angeordnet. Das Betätigungselement ist elektrisch leitend mit dem Chipmodul 10 verbunden. Mit dem Betätigungselement kann beispielsweise eine Verbindung zwischen dem Chipmodul 10 und der Antennenspule 8 unterbrochen werden. Eine andere Möglichkeit ist, dass das Betätigungselement eine Abstimmung der Antenne auf eine bestimmte Frequenz derart verändert, dass keine Funktion in der ursprünglichen Frequenz der Antenne mehr möglich ist. Eine weitere Verwendungsmöglichkeit des mindestens einen Betätigungselements ist, dass zwischen mindestens zwei Chips auf einem Modul oder zwischen mindestens zwei Chipmodulen 10 mittels des Betätigungselements umgeschaltet wird. Die einzelnen Chips bzw. Chipmodule 10 sind dabei eigenen Verwendungen, z.B. privat, beruflich, Transit, Payment, Authentisierung, etc., zugeordnet. Die einzelnen Chips bzw. Chipmodule 10 werden dabei mit dem Betätigungselement so verschaltet, dass immer nur ein Chip oder Chipmodul 10 mit mindestens einer Antennenspule 8 verbunden ist, während alle übrigen Chips bzw. Chipmodule 10 nicht mit der Antennenspule 8 verbunden sind. Beispielsweise kann das Betätigungselement drei Schaltstufen haben. In der ersten Schaltstufe ist kein Chip mit der Antennenspule 8 verbunden und es liegt keine Funktion von Chipmodul 10 und Antennenspule 8 vor. In einer zweiten Schaltstufe ist ein Chip oder ein Chipmodul 10 mit der Antennenspule 8 z.B. speziell für eine Paymentfunktion verbunden. Dafür ist eine hohe Sicherheit notwendig und eine Verarbeitung von Daten dauert entsprechend lange. In einer dritten Schaltstellung wird ein Chip oder Chipmodul 10 mit der Antennenspule 8 speziell für eine Transitanwendung verbunden, bei der es auf eine hohe Geschwindigkeit und eine niedrige Sicherheit ankommt. Eine weitere mögliche Anwendung des Betätigungselements ist es, dass das Betätigungselement ein Betriebssystem des Chipmoduls 10 beeinflusst, um z.B. einen eingestellten Sicherheitslevel zu verändern. Ein Betätigungselement in Form eines Tasters hat beispielsweise kapazitive Flächen, welche z.B. an einer Innen- und Außenseite der externen sicheren Einheit 2 in Form eines Fingerrings 2 angeordnet und so dimensioniert sind, dass beim Tragen des Fingerrings 2 oder bei einer Berührung des Fingerrings 2 von außen eine gewünschte Antennenfrequenz erreicht wird und eine Funktion des Betätigungselements ermöglicht wird. Falls der Fingerring 2 nicht am Finger eines Benutzers getragen wird, dann stimmt die Antennenfrequenz für das Betätigungselement nicht, so dass eine Funktion nicht gegeben ist. Ferner kann das Betätigungselement eine Kombination aus mindestens einem mechanischen und mindestens einem kapazitiven Betätigungselement, z.B. ein Schalter oder Taster sein. Der Vorteil eines Betätigungselements ist es, dass ein unerwünschtes bzw. illegales Erfassen einer externen sicheren Einheit 2, z.B. eines Fingerrings 2, verhindert wird. Ferner können mit Hilfe des Betätigungselements verschiedene Betriebsarten eingestellt werden.

Ein weiteres Ausführungsbeispiel der externen sicheren Einheit 2 ist es, dass eine sichere optische Anzeigeeinheit in der externen sicheren Einheit 2 integriert werden kann. Beispielsweise kann die optische Anzeigeeinheit mittels mindestens einer Leuchtdiode realisiert werden. Die mindestens eine Leuchtdiode kann dabei verschiedene Betriebsmoden darstellen. Wenn ein elektromagnetisches Feld eines Lesegeräts vorhanden ist, dann kann eine Leuchtdiode z.B. grün leuchten. Wenn ein Vorgang abgeschlossen ist, dann kann eine Leuchtdiode rot leuchten oder blinken. Durch ein Blinken einer Leuchtdiode kann ein Code dargestellt werden, z.B. eine Zufallszahl von 1 bis 10. Ein Code kann auch durch ein mehrfarbiges Blinken von z.B. rot und grün dargestellt werden. Zur Anzeige eines Farbcodes können mehrere Leuchtdioden verwendet werden, wobei der Farbcode z.B. ein Passwort oder ein One-Time-Passwort OTP, darstellt, z.B. mittels einer Reihenfolge von Farben wie z.B. rot, grün, blau, blau, rot, grün. Der angezeigt Code kann auch anwendungsspezifisch sein, z.B. für Paymentanwendungen leuchtet eine Leuchtdiode grün, für Transit rot, für einen Zutritt gelb, usw. Neben einer Leuchtdiode als Anzeigeeinheit kann auch eine optische Anzeige für Buchstaben, Zahlen und Symbole verwendet werden. Mit dieser optischen Anzeige können z.B. OTPs, PIN-Nummern, Hash-Werte, Zufallszahlen, Zahlungsbeträge, Inhalte einer elektronischen Geldbörse, etc. angezeigt werden.

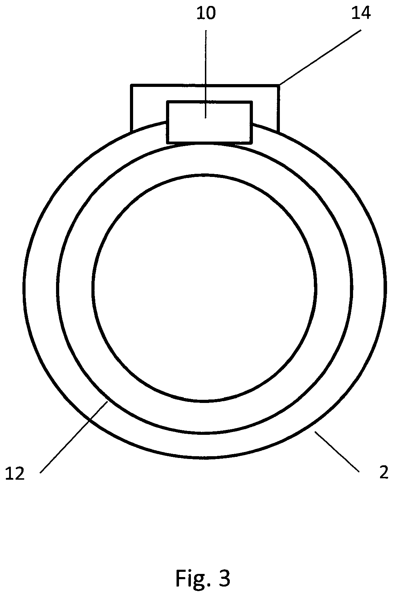

Figur 3 zeigt einen Querschnitt durch eine externe sichere Einheit 2 in der Form eines Fingerrings 2 mit einem auswechselbaren Chipmodul 10. Im Inneren des Fingerrings 2 ist ein Inlett 12 angeordnet. Das Inlett 12 dient als Träger für mindestens eine Antennenspule 8. Das Chipmodul 10 ist in eine Ausnehmung des Fingerrings 2 eingesetzt. Die Lage der Ausnehmung auf dem Fingerring 2 ist beliebig. Das Chipmodul 10 wird von einer Abdeckung 14 gegen äußere Einflüsse geschützt. Die Abdeckung 14 ist z.B. ein Klappdeckel oder ein Deckel, welcher z.B. mittels eines Gewindes mit dem Fingerring 2 verbunden wird. Das Chipmodul 10 ist mittels elektrisch leitender Kontakte mit der mindestens einen Antennenspule 8, welche sich auf dem Inlett 12 befindet, elektrisch leitend verbunden. Das Inlett 12 kann als geschlossener Ring, wie in Figur 3 dargestellt, oder als offener Ring ausgeführt werden, auf dessen Oberfläche z.B. eine Antennenspule 8 angeordnet ist. Das Chipmodul 10 ist insbesondere auswechselbar im Fingerring 2 angeordnet. Alternativ kann das Chipmodul 10 auch fest mit dem Fingerring 2 verbunden sein. Vorteilhafterweise befindet sich das Chipmodul 10 in einem Modulhalter, damit die Kontakte des Chipmoduls 10 mit den Kontakten einer entsprechenden Antennenspule 8 miteinander richtig verbunden werden. Als Format für ein Chipmodul 10 kann beispielsweise ein MFF1-, MFF2-, 4FF-Modul- oder ein MikroSD-Format oder jedes andere geeignete Format dienen. Alternativ können auch übliche Module für kontaktlose Kommunikation verwendet werden, welche z.B. bereits eine Antennenspule 8 auf dem Chipmodul 10 integriert haben. Alternativ ist es möglich das Chipmodul 10 dauerhaft mit den Kontakten des Inletts 12 zu verbinden, z.B. mittels löten, verpressen, kleben, etc.. Falls das Chipmodul 10 ausgetauscht werden soll, dann kann vorteilhafterweise eine Feder in der Ausnehmung des Fingerrings 2 für das Chipmodul 10 integriert werden, um entweder ein späteres Auswechseln zu erleichtern und/oder um die Kontakte des Chipmoduls 10 auf die Kontakte des Inletts 12 zu drücken. Neben einer elektrisch leitenden Verbindung kann das Chipmodul 10 auch mittels einer induktiven Verbindung mit der Antennenspule 8, welche sich auf dem Inlett 12 befindet, verbunden sein. Darüber hinaus kann die Kontaktierung zwischen Chipmodul 10 und Antennenspule 8 kapazitiv erfolgen.

In einem weiteren Ausführungsbeispiel weist die externe sichere Einheit 2 mindestens ein Sicherheitsmerkmal als Schutz gegen Fälschung auf. In die externe sichere Einheit 2, z.B. einen Fingerring 2, werden Sicherheitselemente beispielsweise in die Oberfläche eingebracht oder aufgebracht oder integriert, wie z.B. Hologramme, Kinegramme, Sicherheitsfäden, Mikroschrift, Guillochen, fluoreszierende bzw. phosphoreszierende Farben, optisch variable Farben, Farbverläufe z.B. Gradienten, Irisdruck, Stichtiefdruck, transparente Bereiche z.B. Fenster, etc. Je nach Herstellungsverfahren der externen sicheren Einheit 2 können die Sicherheitsmerkmale während der Herstellung, z.B. Fenster, Hologramm, Sicherheitsfaden, etc., oder nachträglich, z.B. mittels Druck auf- oder eingebracht werden. Mikrostrukturen, z.B. Mikroschrift, Guillochen, können durch ein Abrollen z.B. des Fingerrings 2 als externe sichere Einheit 2, gegen eine mit Mikrostrukturen versehene Fläche erzeugt werden. Der Fingerring 2 wird dabei auf einer drehbaren Achse gehalten und beim Abrollen mit Druck gegen die Fläche gepresst. Es können mehrere Fingerringe 2 auf einer Achse nebeneinander angeordnet werden. Es kann sowohl der Fingerring 2 über die Fläche gerollt werden als auch die Fläche über den Fingerring 2. Die Fläche kann auch eine gebogene Fläche sein. Die Fläche kann optional erhitzt werden. Je nach Form des Fingerrings 2, muss die Fläche eine entsprechende Form haben. Hologramme oder Kinegramme können z.B. durch Abrollen des Fingerrings 2 gegen eine das Hologramm tragende Rolle übertragen werden. Das Hologramm wird dabei unter Einsatz von Wärme und geeignetem Klebstoff mit Druck in den Fingerring 2 gepresst. Das Hologramm muss zuvor auf der Rolle angeordnet werden oder von einer Trägerfolie auf den Fingerring 2 übertragen werden.

In einem weiteren Ausführungsbeispiel der Erfindung weist die externe sichere Einheit 2 einen biometrischen Sensor auf. Damit kann sich der Benutzer der externen sicheren Einheit 2 authentisieren. Beispielsweise kann in den Fingerring 2 als externe sichere Einheit 2 mindestens ein biometrischer Sensor integriert werden. Der biometrische Sensor ist geeignet mit dem Chipmodul 10 verbunden. Der Sensor kann auf dem Chipmodul 10 angeordnet sein oder er kann getrennt vom Chipmodul 10 im Fingerring 2 z.B. auf einer eigenen Schaltungsfolie angeordnet werden. Der biometrische Sensor kann z.B. so in den Fingerring 2 integriert werden, dass der biometrische Sensor z.B. zumindest ein teilweises Venenbild im Finger erfasst, während der Fingerring 2 über einen Finger geschoben wird. Als biometrische Sensoren können z.B. mindestens eine Infrarotdiode und mindestens ein Infrarotsensor verwendet werden. Die Infrarotdiode und der Infrarotsensor sind z.B. dabei einander so gegenüber liegend angeordnet, dass z.B. ein dazwischen liegender Fingerknochen ein Messergebnis nicht negativ beeinflusst. Bei einer ersten Erfassung z.B. eines Venenbildes des Ringfingers, muss das Venenbild aus allen möglichen Winkeln entlang der ganzen Fingerlänge erfasst werden, um eine spätere Authentisierung des Benutzers aus beliebigen Winkeln bei beliebigen Verschiebungen entlang des Fingers durchführen zu können. Die erste Erfassung kann mittels des mindestens einen biometrischen Sensors des Fingerrings 2 oder mittels eines externen biometrischen Sensors erfolgen. Nach der ersten Erfassung müssen die erfassten biometrischen Daten im Chipmodul 10 des Fingerrings 2 als externe sichere Einheit 2 abgespeichert werden. Dies kann z.B. bei einer Personalisierung der externen sicheren Einheit 2, sprich hier des Fingerrings 2 geschehen. Bei einer Authentisierung des Benutzers werden die erfassten biometrischen Daten mit den gespeicherten Daten verglichen. Ergibt der Vergleich eine Übereinstimmung der erfassten mit den gespeicherten Daten, so ist der Benutzer authentisiert. Beim Vergleich der erfassten mit den gespeicherten biometrischen Daten können entweder die vollständigen erfassten Daten mit den gespeicherten Daten verglichen werden, oder es können nur bestimmte charakteristische Punkte der erfassten Daten mit den gespeicherten Daten verglichen werden. Bei den charakteristischen Daten handelt es sich z.B. um Kreuzungspunkte von Venen oder sonstige außergewöhnliche Merkmale. Ferner kann zusätzlich noch eine Toleranz bezüglich einer Position der Merkmale oder eines Helligkeitsunterschieds gegenüber einem erfassten Hintergrund eingerichtet werden. Vorteilhaft an den charakteristischen Daten ist, dass weniger Speicherplatz im Chipmodul 10 benötigt wird. Alternativ kann auch ein Fingerabdruck z.B. eines Fingers erfasst werden.

Ein vorteilhaftes Anwendungsbeispiel für eine externe sichere Einheit 2 mit einem biometrischen Sensor wird im Folgenden beschrieben. Anstatt sich an einem Bankterminal per Kundenkarte zu authentisieren um beispielsweise Bargeld abzuholen oder um eine andere Transaktion durchzuführen, gibt es die Möglichkeit, dass sich ein Benutzer mit einer externen sicheren Einheit 2 z.B. mit einem biometrischen Sensor, z.B. mit dem oben beschriebenen Fingerring 2 mit einem biometrischen Sensor am Terminal authentisiert. Zwischen Terminal und Fingerring 2 findet beispielsweise eine kontaktlose Kommunikation, z.B. per NFC, statt, welche bevorzugt verschlüsselt ist. Der Benutzer des Fingerrings 2 authentisiert sich mittels der im Fingerring 2 gespeicherten biometrischen Daten. Das Terminal vergleicht die vom Fingerring 2 empfangenen biometrischen Daten, z.B. die Daten von Fingervenen, mit den in einem Hintergrundsystem gespeicherten Daten und gibt in Abhängigkeit von dem Vergleich z.B. eine Transaktion frei. Alternativ dazu ist es möglich, dass das Terminal ein Lesegerät für biometrische Daten enthält. Die von dem Lesegerät erfassten biometrischen Daten des Benutzers, z.B. ein Fingerabdruck, werden an den Fingerring 2 übertragen. Im Fingerring 2 findet dann der Vergleich zwischen den erfassten und gespeicherten Daten statt. In Abhängigkeit von dem Ergebnis des Vergleichs gibt der Fingerring 2 ein Signal an das Terminal z.B. über eine Freigabe einer Transaktion aus. Vorteilhaft am vorgeschlagenen Verfahren ist, dass es sehr benutzerfreundlich ist, da keine Smartcard mitgenommen bzw. am Terminal vergessen werden kann, da die externe sichere Einheit 2 ständig am Körper, z.B. am Finger getragen wird. Ferner ist eine Authentisierung am Terminal sogar dann möglich, wenn das Terminal keine Verbindung zu einem Hintergrundsystem hat.

Ein weiteres vorteilhaftes Ausführungsbeispiel der Erfindung beschreibt ein Chipmodul 10, welches mindestens zwei physikalisch voneinander getrennte Prozessoren mit den jeweils dazu gehörenden Speicherbereichen aufweist. Die einzelnen Prozessoren mit ihren dazu gehörenden Speichern können sich entweder jeweils auf einem eigenen Chip befinden oder alle Prozessoren mit ihren dazu gehörenden Speichern befinden sich auf einem Chip, wobei jeder Prozessor und Speicher einen eigenen Bereich auf dem Chip in Anspruch nimmt. Dies hat den Vorteil, dass die jeweiligen Prozessoren und dazugehörenden Speicherbereiche auf die jeweilige Anwendung, insbesondere hinsichtlich geforderter Geschwindigkeit und Sicherheit hin angepasst werden können. Beispielsweise kann ein Chipmodul 10 optimierte Bereiche hinsichtlich jeweils einer Dual-SIM-, Payment- oder Transit-Anwendung aufweisen. Jeder Anwendung ist dabei jeweils ein Prozessor zugeordnet, wobei jeder Prozessor dabei seinen eigenen Speicher hat, wobei sich die Speicher in der Speichergröße unterscheiden können. Die jeweiligen Prozessoren werden mittels üblicher Kontakte bzw. Schnittstellen mit ihrer äußeren Umgebung verbunden, z.B. gemäß ISO 7816 oder gemäß SPI. Jeder Prozessor bzw. dessen Anwendung kann einen eigenen Sicherheitslevel aufweisen. In einem weiteren Ausführungsbeispiel übernimmt jeweils der Prozessor mit dem höchsten Sicherheitslevel eine Masterfunktion. Alle anderen Prozessoren mit jeweils einem niedrigeren Sicherheitslevel übernehmen eine Slavefunktion. Jeder Prozessor und dazugehörige Speicher sind z.B. jeweils auf einem eigenen Chip angeordnet. Die einzelnen Chips sind beispielsweise mittels eines Bonddrahts miteinander verbunden. Alternativ können die Chips auch so übereinander angeordnet sein, dass eine Verbindung zwischen den einzelnen Chips mittels einer Durchkontaktierung realisiert wird. Eine Durchkontaktierung zu einer außen liegenden Schnittstelle erfolgt vorzugsweise über den Master, da dieser in der Regel den höchsten Sicherheitslevel aufweist. Die Auswahl der einzelnen Chips bzw. deren Anwendungen erfolgt über den Master, welcher eine entsprechende Applikation aufweist. Alternativ kann die Auswahl der einzelnen Chips auch über ein Protokoll erfolgen. Als weitere Alternative hat jeder Chip seine eigenen Kontakte nach außen, d.h. jeder Chip bzw. seine Anwendung kann von außen direkt ausgewählt werden, ohne erst über den Master zu gehen. Die einzelnen Chips werden bei der Herstellung miteinander verklebt. Vorteilhafterweise können die Chips vor dem Verkleben geschliffen werden, um eine niedrigere Bauhöhe zu erreichen. Es können gleiche und verschiedene Chips miteinander verklebt werden. Auf jedem Chip kann sich neben einer eigenen Anwendung ein eigenes Betriebssystem befinden. Alternativ ist es möglich, dass mindestens zwei Chips dieselbe Anwendung ausführen. Dies kann insbesondere bei sicherheitskritischen Anwendungen genutzt werden, wo eine hohe Ausfallsicherheit gefordert wird, wie z.B. bei Flugzeugen. Das bedeutet beispielsweise, dass wenn ein Chip defekt ist, ein anderer noch funktionierender Chip ein System in einen sicheren Zustand fahren kann. Ferner können sich die einzelnen Chips mittels ihrer Verbindungen gegenseitig kontrollieren, um z.B. einen sicheren Betrieb zu gewährleisten oder um z.B. Angriffe auf einen Chip abzuwehren bzw. zumindest zu erschweren.

In einem weiteren Ausführungsbeispiel weist die externe sichere Einheit 2 einen Energiespeicher, z.B. einen Akku oder eine Batterie auf. Der Energiespeicher ist mit dem Chipmodul 10 verbunden, um das Chipmodul 10 außerhalb eines elektromagnetischen Feldes eines Lesegeräts mit Energie zu versorgen. Innerhalb des Feldes des Lesegerätes kann die Energie des Energiespeichers zusätzlich verwendet werden, um die Reichweite der Antennenspule 8 beim Senden zu erhöhen. Der Energiespeicher wird vorzugsweise mittels des elektromagnetischen Felds des Lesegeräts geladen. Der Energiespeicher kann auch verwendet werden um außerhalb des Felds des Lesegeräts alternative Kommunikationskanäle, wie z.B. WLAN, Infrarot, etc., welche vom Chipmodul 10 ebenfalls unterstützt werden, zu betreiben. Ferner kann der Energiespeicher dazu verwendet werden, um elektronische Komponenten, wie z.B. Anzeigeeinheiten oder Anzeigeelemente, zu betreiben und mit Energie zu versorgen. Der Energiespeicher ermöglicht ferner den unterbrechungsfreien Betrieb des Prozessors nach Verlassen des Felds des Lesegeräts. Der Energiespeicher kann zum Laden direkt mit der Antennenspule 8 über eine Gleichrichterschaltung verbunden werden, wobei das Chipmodul 10 den Energiespeicher entsprechend mit der Antennenspule 8 mittels einer geeigneten Verbindungseinrichtung verbindet.

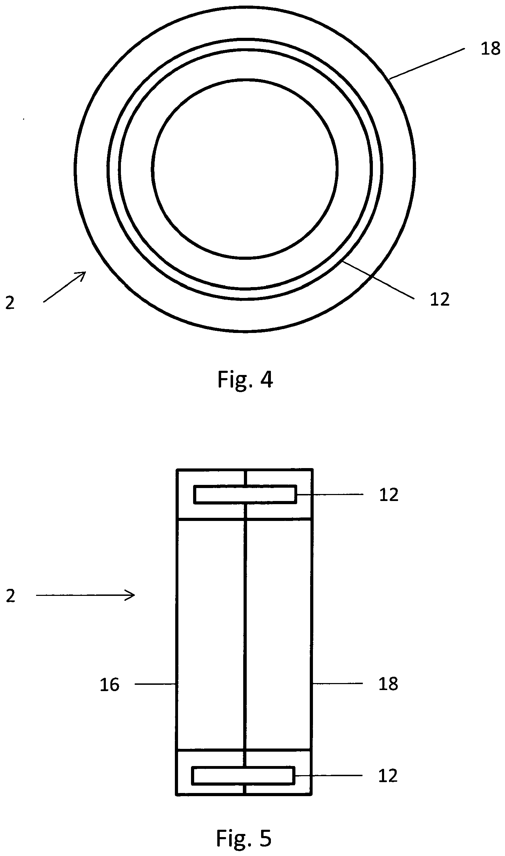

Figuren 4 bis 10 beschreiben beispielhaft mögliche Aufbauvarianten einer externen sicheren Einheit 2 in Form eines Fingerrings 2.

Figur 4 zeigt einen Längsschnitt durch einen Fingerring 2. Hier ist ein Inlett 12 in eine Hälfte 18 des Fingerrings 2 eingesetzt. Figur 5 zeigt einen zu Figur 4 entsprechenden Querschnitt des Fingerrings 2. Der Fingerring 2 besteht aus zwei Ringhälften 16 und 18. Die beiden Ringhälften 16 und 18 haben jeweils eine Ausnehmung, in die das Inlett 12 eingesetzt ist.

Der Fingerring 2 besteht grundsätzlich aus mindestens einer Komponente 16, 18, in welche mindestens ein Inlett 12 eingesetzt wird, wobei eine Komponente eine Ringhälfte 16,18 sein kann. Die Komponenten 16 und 18 werden durch eine geeignete Technik hergestellt, z.B. gießen, fräsen, prägen. Als Material für die Komponenten 16, 18 bietet sich Kunststoff oder Metall an. Die Komponenten 16 und 18 sind somit einfach, schnell und kostengünstig herzustellen. Ferner können die Komponenten einfach an unterschiedliche Abmessungen angepasst und entsprechend hergestellt werden. Die Komponenten 16, 18 des Fingerrings 2 werden durch eine geeignete Technik miteinander verbunden, z.B. mittels stecken, kleben, verschrauben, verpressen, etc. Vorteilhaft werden die Komponenten 16,18 so verbunden, dass die Verbindung zwischen den Komponenten 16,18 wieder gelöst werden kann, um z.B. ein weiteres Inlett 12 einzusetzen oder um ein Inlett 12 auszuwechseln, z.B. weil es defekt ist. Das Inlett 12 wird dazu in mindestens eine dafür vorgesehene Aussparung innerhalb mindestens einer Komponente 14, 16 eingesetzt. Das Inlett 12 selbst besteht aus einem vorzugsweise flexiblen Trägermaterial, z.B. PET, Capton, etc. Auf dem Trägermaterial ist mindestens eine Antennenspule 8 und mindestens ein Chipmodul 10 angeordnet, wobei die Antennenspule 8 mit dem Chipmodul 10 verbunden ist. Die Antennenspule 8 kann z.B. für eine NFC-Kommunikation geeignet sein. Die Antennenspule 8 kann optional ein Ferritelement zur Erhöhung der Reichweite enthalten. Die Antennenspule 8 wird auf den Träger durch eine geeignete Technologie aufgebracht, z.B. mittels einer Drucktechnik, einer Drahtlegetechnik, einer Ätztechnik, einer Frästechnik. Das Chipmodul 10 wird mittels einer geeigneten Technik mit der Antennenspule 8 verbunden, z.B. mittels löten, kleben, verpressen. Neben dem Chipmodul 10 kann sich noch mindestens eine weitere Elektronikkomponente auf dem Träger befinden, z.B. ein Anzeigeeinheit oder eine weitere Antennenspule 8.

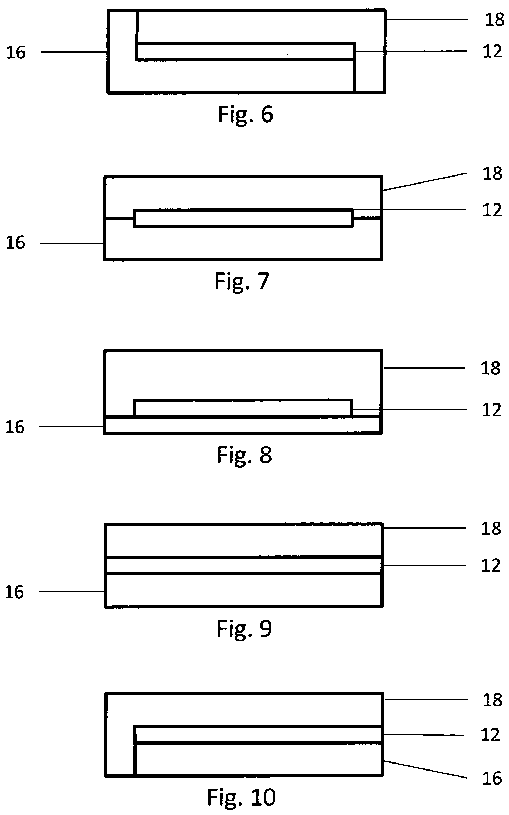

Die Figuren 6 bis 10 zeigen unterschiedliche Querschnitte durch einen Fingerring 2, bestehend aus ringförmigen Komponenten 16,18 des Fingerrings 2 und eines Inletts 12. Figur 6 zeigt einen Querschnitt, wobei die Komponenten 14 und 16 ein L-förmiges Profil aufweisen. Zwischen den beiden L-förmigen Komponenten 16 und 18 ist ein Inlett 12 angeordnet. Figur 7 zeigt entsprechend zwei U-förmige Komponenten 16 und 18, zwischen denen ein Inlett 12 angeordnet ist. Figur 8 zeigt eine U-förmige Komponente 18 und eine ebene Komponente 16, wobei zwischen den Komponenten 16 und 18 das Inlett 12 angeordnet ist. Figur 9 zeigt zwei ebene Komponenten 16 und 18, zwischen denen das Inlett 12 angeordnet ist. Figur 10 zeigt eine L-förmige Komponente 18 und eine ebene Komponente 16, zwischen denen das Inlett 12 angeordnet ist.

Die Komponenten 16,18 des Fingerrings 2 können aus gleichen oder unterschiedlichen Materialien hergestellt werden. Als Materialien kommen z.B. Kunststoff oder Karbon in Frage, wobei zwischen den Komponenten 16 und 18 optional mindestens ein Ferritelement mit geeigneter Struktur und Form angeordnet ist.

Im Fingerring 2 als externe sichere Einheit 2 kann mindestens ein Inlett 12 angeordnet werden. Das Inlett 12 kann dabei mindestens ein Chipmodul 10 mit mindestens einer Antennenspule 8 aufweisen, wobei optional mindestens ein weiteres elektronisches Bauelement, z.B. eine Anzeige, auf dem Inlett 12 angeordnet ist.

Optional kann der Fingerring 2 eine Unterbrechung haben, so dass es sich nicht um einen geschlossenen Fingerring 2 handelt.

Vorteilhaft ist, dass der Fingerring 2 in unterschiedlichen Abmessungen, insbesondere Durchmessern hergestellt werden kann, ohne dass die Antennenspule 8 oder das Chipmodul 10 an die geänderten Abmessungen, welche die Antennenfrequenz beeinflussen, angepasst werden müssen.

Vorteilhaft ist, dass die Frequenz der Antennenspule 8 unabhängig ist von den Abmessungen des Fingerrings 2. Die Antennenspule 8 befindet sich auf dem Träger, welcher sowohl in einen kleinen als auch einen großen Fingerring 2 eingesetzt wird. Eine Veränderung der Abmessungen des Fingerrings 2 hat somit auf den Träger, insbesondere die Antennenspule 8 keinen Einfluss, weil der Träger immer gleich bleibt und sich nur die Abmessungen des Fingerrings 2 ändern, so dass die Frequenz der Antennenspule 8 bei kleinen als auch großen Fingerringen 2 immer gleich bleibt.

Zur Herstellung einer externen sicheren Einheit 2 in Form eines Fingerrings 2 wird ein Verfahren vorgeschlagen, das es ermöglicht Fingerringe 2 in beliebiger Größe aus einem flexiblen Material herzustellen. Beispielsweise kann es sich wie oben beschrieben, um einen Fingerring 2 mit einer NFC-Funktionalität handeln. Es sind aber alle anderen kontaktlosen Kommunikationstechnologien ebenfalls möglich.

Auf eine Trägerfolie werden mindestens ein Chipmodul 10 und mindestens eine Antennenspule 8 und optional weitere elektronische Baugruppen, z.B. eine weitere Antennenspule 8 oder eine Anzeige, aufgebracht. Die Antennenspule 8 kann beispielsweise auf die Trägerfolie mittels einer leitfähigen Paste gedruckt werden. Vorteilhafterweise wird eine Vertiefung in der Trägerfolie, z.B. mittels fräsen, lasern, ätzen, hergestellt, bevor das Chipmodul 10, die Antennenspule 8 und optionale weitere elektronische Bauelemente in die Vertiefung eingesetzt werden. Die Vertiefung hat den Sinn, dass die in die Vertiefung einzusetzenden Bauelemente möglichst nicht über die Trägerfolie hinaus stehen und somit eine ebene Oberfläche auf der Trägerfolie vorhanden ist, welche eine spätere Verarbeitung der Trägerfolie mit eingesetzten Bauelementen erleichtert. Die Trägerfolie selbst besteht aus einem flexiblen Kunststoffmaterial, z.B. PET oder Capton. Die Trägerfolie besteht aus mindestens einer Folie. Aus der Trägerfolie wird ein streifenförmiger Ringrohling vereinzelt, z.B. mittels stanzen, lasern. Alternativ ist es möglich, dass zuerst aus einer Trägerfolie ein Ringrohling vereinzelt wird, in diesen eine Vertiefung eingebracht wird und dann die Bauelemente in die Vertiefung eingesetzt werden. Vorteilhafterweise werden in einem Folienbogen mehrere Vertiefungen für die späteren Ringrohling eingebracht, die Bauelemente in die Vertiefungen eingesetzt und am Ende die Ringrohlinge mit den eingesetzten Bauelementen aus der Trägerfolie vereinzelt. Ferner ist eine Herstellung von Ringrohlingen entsprechend auch in einem Rolle-zu-Rolle-Verfahren möglich.

Auf die Trägerfolie oder den Ringrohling kann auf mindestens einer Seite mindestens eine weitere Folie aufgebracht werden. Es kann somit ein mehrschichtiger Folienverbund erzeugt werden. Die Folien können z.B. mittels Klebstoff oder Laminierung miteinander verbunden werden.

Alternativ ist es möglich, dass nicht nur mindestens zwei Folien übereinander angeordnet werden, sondern dass mindestens zwei Folien hintereinander angeordnet und z.B. an ihren Stirnseiten miteinander verbunden werden, z.B. mittels Klebstoff, wobei der Klebstoff UV- oder thermisch aktivierbar ist.

Die Trägerfolie und die mindestens eine weitere Folie können lichtdurchlässig oder lichtundurchlässig sein.

Ferner kann mindestens eine Folie mittels eines geeigneten Verfahrens zumindest teilweise bedruckt werden, z.B. mittels Laserdruck, Siebdruck, Offsetdruck.

Wie oben beschrieben, werden die Ringrohlinge aus der Trägerfolie nach Abschluss der vorher beschriebenen Arbeitsschritte ausgestanzt. In Abhängigkeit vom Durchmesser eines herzustellenden Fingerrings 2 werden die Ringrohlinge in entsprechender Länge vereinzelt, z.B. ausgestanzt. Ein weiterer möglicher Faktor, welcher die Länge des Ringrohlings beeinflusst, ist eine geplante Dicke des herzustellenden Fingerrings 2, d.h. je dicker der Fingerring 2 werden soll, desto größer muss die Länge des Ringrohlings sein.

Wesentlich für die Erfindung ist, dass unabhängig von der Länge des jeweils vereinzelten Ringrohlings die Länge des Bereichs in der Trägerfolie mit dem Chipmodul 10, der Antennenspule 8 und ggf. weiteren elektronischen Bauelementen bei jedem Ringrohling bzw. jedem späteren Fingerring 2 gleich bleibt.

Idealerweise hat ein Ringrohling über seine gesamte Länge eine einheitliche Dicke, um spätere Stufen oder Absätze zu vermeiden. Sollten dennoch Stufen oder Absätze z.B. durch das Chipmodul 10 entstehen, so können diese Stufen oder Absätze durch Auftragen einer Paste, die z.B. thermisch oder UV härtend ist, ausgeglichen werden.

Nachdem der Ringrohling entsprechend der obigen Schritte vorbereitet und auf eine bestimmte gewünschte Länge vereinzelt wurde, wird der Ringrohling aufgewickelt oder aufgerollt um die Form eines Fingerrings 2 mit entsprechendem Durchmesser und Dicke des Fingerrings 2 zu erhalten. Um einen festen Verbund zu bilden, wird der Ringrohling unter Druck und Wärme in einer Form, in die der gerollte Ringrohling eingelegt wurde, laminiert.

Alternativ kann der Ringrohling um einen Kernring gewickelt werden. Der Kernring hat die Form z.B. eines Fingerrings 2. Ferner hat der Kernring beispielsweise ein U-förmiges Querschnittprofil. Der Kernring besteht vorteilhafterweise aus Kunststoff. Vorzugsweise wird der Kernring mittels eines Spritzguss- oder eines Druckgussverfahrens hergestellt.

Der gemäß dem oben beschriebenen Verfahren hergestellte Fingerring 2 kann ein geschlossener Ring oder ein unterbrochener Ring, dessen Enden sich nicht berühren, sein.

Mit dem oben beschriebenen Verfahren können externe sichere Einheiten 2 in Form eines Fingerrings 2 mit unterschiedlicher Größe hergestellt werden, ohne, dass es einer speziellen Anpassung z.B. der Antennenspule 8 an die Abmessungen des Fingerrings 2 bedarf.

Alternativ zu dem vorher beschriebenen Verfahren kann die externe sichere Einheit 2 in Form eines Fingerrings 2 mittels eines Spritzgussverfahrens hergestellt werden.

Dazu werden das Chipmodul 10 und die Antennenspule 8 und gegebenenfalls weitere elektronische Bauelemente wie oben beschrieben auf einer Trägerfolie angeordnet. Aus der Trägerfolie können die einzelnen Ringrohlinge in unterschiedlichen Längen vereinzelt werden, um die Ringrohlinge z.B. ringförmig zusammen zu rollen. Anschließend kann ein gerollt oder nicht gerollter Ringrohling in eine Spritzgussform eingelegt werden, um den Ringrohling mit einem geeigneten Spritzgussmaterial zu umspritzen. Als Material wird hierfür z.B. ein Kunststoff oder ein Harz verwendet. Nach dem Umspritzen ist ein ringförmiger Körper entstanden, in dessen Inneren das Chipmodul 10 und die Antennenspule 8 und gegebenenfalls weitere elektronische Bauelemente angeordnet sind.

In einem weiteren Ausführungsbeispiel werden das Chipmodul 10 und die Antennenspule 8 ohne sie auf einer Trägerfolie anzuordnen miteinander elektrisch leitend verbunden und anschließend in eine Spritzgussform eingelegt, um sie zu umspritzen. Das Chipmodul 10 und die Antennenspule 8 werden dabei vorteilhafterweise mittels Stegen in einer gewünschten Position gehalten.

Nach dem Umspritzen von Chipmodul 10 und Antennenspule 8 und gegebenenfalls weiteren elektronischen Bauelementen zur Herstellung eines ringförmigen Körpers wird auf den ringförmigen Körper eine Folie aufgetragen. Die Folie kann bedruckt sein oder z.B. ein Muster oder ein Design oder eine Beschriftung aufweisen. Die Folie kann auf den ringförmigen Körper z.B. geklebt werden.

Alternativ kann der ringförmige Körper auf seiner Oberfläche zumindest teilweise mit einer Metallisierungsschicht bedampft werden, z.B. mit Aluminium. Als ein weiteres Ausführungsbeispiel kann die Oberfläche bedruckt oder lackiert werden.

Als eine weitere Alternative kann auf der Oberfläche des ringförmigen Körpers zumindest teilweise eine ringförmige Ummantelung aus mindestens einem ringförmigen Teil aufgebracht werden. Vorteilhafterweise besteht die Ummantelung zumindest im Bereich der Antennenspule 8 aus nichtmetallischen Material, z.B. Kunststoff. Die Ummantelung selbst kann z.B. mittels eines Druckgussverfahrens hergestellt werden.

Als alternatives Ausführungsbeispiel kann die externe sichere Einheit 2 in Form eines Fingerrings 2 sowohl aus Metall als auch aus Kunststoff hergestellt werden.

Der Fingerring 2 besteht dazu aus mindestens zwei Komponenten. Eine erste Komponente besteht aus Metall und eine zweite Komponente besteht aus Kunststoff. Die erste Komponente besteht z.B. aus Silber, Gold, Titan, Stahl. Optional ist in der ersten Komponente z.B. ein Edelstein angeordnet. Vorzugsweise bildet die erste Komponente ein Bogenelement von mehr als 180 Grad des Fingerrings 2. Die zweite Komponente besteht z.B. aus PET, PVC, Carbon. In der zweiten Komponente ist das Chipmodul 10 und die Antennenspule 8 und evtl. mindestens eine weitere elektronische Baugruppe, z.B. eine Anzeige angeordnet. Die zweite Komponente besteht aus mindestens einem Bestandteil. Das Chipmodul 10 und die Antennenspule 8 und die evtl. weiteren elektronischen Baugruppen werden wie oben beschrieben auf einem Träger angeordnet. Der Träger wird vorzugsweise in eine Aussparung in der zweiten Komponente eingesetzt. Optional kann der Träger mit ringförmigen Elementen umgeben werden, die z.B. gemäß dem oben beschriebenen Druckgussverfahren hergestellt werden. Der Träger kann auswechselbar in der zweiten Komponente angeordnet werfen. Alternativ kann der Träger auch fest mit der zweiten Komponente verbunden werden, z.B. mittels eines Klebstoffs. Die erste und die zweite Komponente weisen entgegen gesetzte positive und negative Strukturen an ihren jeweiligen Enden auf, um beide Komponenten miteinander zu verbinden.

Als weiteres vorteilhaftes Ausführungsbeispiel wird die externe sichere Einheit 2, z.B. in Form eines Fingerrings 2 personalisiert. In den Fingerring 2 kann beispielsweise eine von außen sichtbare, optische Personalisierung und/oder eine elektronische Personalisierung eingebracht werden. Als Daten zur Personalisierung können beispielsweise Vorname, Nachname, Geburtsdatum, Adresse, Foto, Kontonummer, Bankleitzahl, Sozialversicherungsnummer, Versichertennummer einer Krankenkasse eines Benutzers oder eine Seriennummer des Fingerrings 2 verwendet werden. Der Fingerring 2 kann während der Herstellung oder nach der Herstellung personalisiert werden. Bei der von außen sichtbaren optischen Personalisierung werden in oder auf die Oberfläche des Fingerrings 2 z.B. mittels Hoch- oder Tiefprägung oder Druck z.B. der Name des Benutzers oder eine Seriennummer ein- bzw. aufgebracht. Eine von außen sichtbare optische Personalisierung kann z.B. mittels eines Lasers, einer Fräse, eines Inkjet-Druckers, eines Thermotransferdruckers, eines Sieb- oder Offsetdrucks ein- bzw. aufgebracht werden. Bei der elektronischen Personalisierung werden Personalisierungsdaten in das mindestens eine Chipmodul 10 des Fingerrings 2 eingeschrieben. Die Personalisierungsdaten können entweder direkt über eine kontaktgebundene Verbindung auf das Chipmodul 10 eingeschrieben werden, z.B. bei der Herstellung des Chipmoduls 10 z.B. mittels Kontaktnadeln, oder über eine kontaktlose Verbindung, z.B. über die mit dem Chipmodul 10 verbundene Antennenspule 8, nachdem das Chipmodul 10 mit der Antennenspule 8 verbunden wurde. Die von außen sichtbare optische Personalisierung und die elektronische Personalisierung können gleichzeitig oder nacheinander ausgeführt werden. Beispielsweise können bei der Herstellung eines Fingerrings 2 mittels Spritzguss Personalisierungsdaten, z.B. eine individuelle Prägung, in den Fingerring 2 eingebracht werden. Die Personalisierungsdaten in Form einer individuellen Prägung werden anschließend in das Chipmodul 10 geschrieben. Umgekehrt ist es beispielsweise möglich, dass zuerst die Personalisierungsdaten aus dem Chipmodul 10 z.B. über die Antennenspule 8 ausgelesen werden, um die Personalisierungsdaten beim Spritzguss des Fingerrings 2 entsprechend in bzw. auf den Fingerring 2 auf- bzw. einzubringen. Zur Personalisierung wird mindestens ein Fingerring 2 beispielsweise auf einer Achse befestigt. Die Personalisierungsdaten werden z.B. mittels eines Lasers oder Druckers auf der Oberfläche des Fingerrings 2 z.B. zeilenweise aufgebracht. Vorher, gleichzeitig oder anschließend werden die Personalisierungsdaten in das Chipmodul 10 übertragen.

Ein Anwendungsbeispiel für die externe sichere Einheit 2, z.B. in Form eines Fingerrings 2, ist eine Verschlüsselung von Daten. Die externe sichere Einheit 2, z.B. der Fingerring 2, ist mittels einer kontaktlosen Schnittstelle, z.B. eine NFC-Schnittstelle, welche durch die Antennenspule 8 gebildet wird, mit einem mobilen Kommunikationsgerät 4, z.B. einem Smartphone, über eine entsprechende Schnittstelle, z.B. eine NFC-Schnittstelle, verbunden. Mittels einer weiteren Schnittstelle ist das Kommunikationsgerät 4 mit einem Kommunikationsnetz, z.B. Mobilfunknetz, verbunden, wobei es sich hier vorzugsweise um eine kontaktlose Verbindung mit dem Kommunikationsnetz handelt. Über das Kommunikationsnetz kann z.B. eine Verbindung in andere Kommunikationsnetze aufgebaut werden, z.B. in das Internet. Der Fingerring 2 wird am Finger des Benutzers getragen. Der Fingerring 2 ist in der Lage Daten über die NFC-Schnittstelle oder gegebenenfalls über weitere Schnittstellen zu empfangen, die empfangenen Daten zu verschlüsseln und anschließend die verschlüsselten Daten entweder über die gleiche oder eine andere Schnittstelle, z.B. Infrarot oder WLAN, an das Kommunikationsgerät 4 zurück zu senden. Alternativ kann der Fingerring 2 die verschlüsselten Daten an ein weiteres externes Kommunikationsgerät 4, z.B. ein weiteres Smartphone, übertragen, mit dem der Fingerring 2 eine Kommunikationsverbindung hat. Als weitere Alternative kann der Fingerring 2 die verschlüsselten Daten an ein z.B. über das Internet mit dem Kommunikationsgerät 4 verbundenes Gerät, z.B. einen Server, übertragen. Als weitere Alternative kann der Fingerring 2 die verschlüsselten Daten an ein über ein mobiles Kommunikationsnetzwerk, z.B. Mobilfunknetzwerk, mit dem Kommunikationsgerät 4 verbundenes Gerät, z.B. einen Server, übertragen. Die zu verschlüsselnden Dateien können z.B. einzelne Dateien, Dateiordner oder Datenströme, wie sie z.B. bei Multimedia-Anwendungen vorkommen, sein. Der Fingerring 2 kann auch vom Kommunikationsgerät 4 empfangene verschlüsselte Daten entschlüsseln und die entschlüsselten Daten an das Kommunikationsgerät 4 zurück senden bzw. an ein anderes z.B. über Internet verbundenes Kommunikationsgerät 4 übertragen. Zur Ver- und Entschlüsselung kommen übliche Verfahren zur Anwendung, z.B. DES, RSA, ECC. Ferner unterstützt der Fingerring 2 Verfahren zum sicheren Austausch von Schlüsseln. Der Fingerring 2 enthält eine geordnete Liste mit Kontaktdaten zu anderen Geräten, z.B. IPv4-, IPv6-Adresse, Telefonnummer, Namen, Adressen, welche öffentliche Schlüssel für eine asymmetrische Verschlüsselung verwendet werden, sowie welche symmetrischen Schlüssel eingesetzt werden, wobei die Liste mit Kontaktdaten im Fingerring 2 abgespeichert ist. Ferner unterstützt der Fingerring 2 eine sogenannte Public Key Infrastructure, abgekürzt PKI. Die geordnete Liste mit Kontaktdaten zu anderen Geräten kann im Kommunikationsgerät 4, z.B. Smartphone, angezeigt werden. Ferner enthält der Fingerring 2 einen optional geschützten Datenspeicher, z.B. mittels Passwort, welcher über das Kommunikationsgerät 4 zugänglich ist, um z.B. vertrauliche Daten durch den Benutzer zu speichern. Zur Nutzung des Fingerrings 2 durch das Kommunikationsgerät 4, z.B. Smartphone, ist die Ausführung einer entsprechenden Anwendung auf dem Kommunikationsgerät 4 notwendig. Zur Ausführung der Anwendung kann optional eine Passwort-abfrage erfolgen. Der Fingerring 2 kann somit nur nach einer vorherigen Authentisierung durch das Kommunikationsgerät 4, z.B. Smartphone, verwendet werden. Der Fingerring 2 kann nur solange zur Ver- und/oder Entschlüsselung verwendet werden, wie eine Verbindung, z.B. über NFC, zum Kommunikationsgerät 4, z.B. Smartphone, besteht. Eine andere Variante ist, dass die Nutzung zur Ver- und Entschlüsselung zeitlich befristet ist. Eine weitere Variante ist, dass die Nutzung zur Ver- und Entschlüsselung des Fingerrings 2 ereignisbasiert ist, d.h. dass die Ver- und Entschlüsselung nur solange genutzt wird, wie z.B. eine Telefonverbindung besteht. Die mit dem Fingerring 2 ver- und/oder entschlüsselten Daten können an verschiedene gegebenenfalls öffentlich zugängliche Datenspeicher, z.B. Cloudspeicher, übertragen und/oder von diesen abgerufen werden. Öffentliche Schlüssel von mindestens zwei Fingerringen 2 werden in einem zentralen Server gespeichert und können durch Anfrage eines Fingerrings 2, mit einer optionalen vorherigen Authentisierung des anfragenden Fingerrings 2, beim zentralen Server, abgerufen werden. Somit steht ein notwendiger öffentlicher Schlüssel lokal auf einem Fingerring 2 zur Verfügung um eine Verschlüsselung mit einer anschließenden Übertragung von Daten an mindestens einen anderen Fingerring 2 bzw. das jeweils mit dem anderen Fingerring 2 verbundene Kommunikationsgerät 4 durchzuführen. Ein Austausch von Schlüsseln kann auf bestimmte Nutzergruppen beschränkt werden. Somit lässt sich eine einfache und sichere Datenver- und -entschlüsselung erreichen, wobei die externe sichere Einheit 2, wie hier z.B. der Fingerring 2, am Körper, bzw. wie hier am Finger, getragen wird.

Ein weiteres Anwendungsbeispiel der externen sicheren Einheit 2, z.B. in Form eines Fingerrings 2, ist, dass die externe sichere Einheit 2 in der Lage ist die eigene Position zu bestimmen, um z.B. eine Transaktion abzusichern. Dazu wird in die externe sichere Einheit 2, z.B. ein Fingerring 2, ein Element zur sicheren Positionsbestimmung integriert. Eine zur Positionsbestimmung notwendige Energie kann beispielsweise durch das elektromagnetische Feld eines Kommunikationsgeräts 4 bereitgestellt werden, mit dem der Fingerring 2, z.B. über eine NFC-Schnittstelle verbunden ist. Das Element zur Positionsbestimmung besteht aus einem Chip mit einer geeigneten Antenne. Das Element zur Positionsbestimmung ist mit dem Chipmodul 10 verbunden. Falls das Chipmodul 10 mit der Antenne zur Positionsbestimmung verbunden ist, dann kann die Positionsbestimmung auch durch das Chipmodul 10 ausgeführt werden. Je nach Anwendung kann eine Genauigkeit der Positionsbestimmung variieren. Die Positionsbestimmung kann auf Satelliten basieren, wie dies z.B. von GPS oder Galileo bekannt ist. Alternativ kann die Positionsbestimmung basierend auf Daten aus Netzwerken erfolgen, wie z.B. von WLAN und GSM. Darüber hinaus ist eine kombinierte Positionsbestimmung aus den vorher genannten Möglichkeiten der auf Satelliten basierenden und der auf Netzwerkdaten basierenden Positionsbestimmung möglich. Somit ist eine unabhängige und sichere Bestimmung bzw. Überprüfung einer Position eines Nutzers mittels einer am Körper getragenen sicheren Einheit 2, z.B. eines Fingerrings 2, möglich. Beispielsweise kann durch einen Vergleich einer Position des Fingerrings 2 und einer Position eines Bankterminals, vor dem sich der Benutzer aktuell befindet, beispielsweise ein sogenannter Man-in-the-Middle-Angriff verhindert werden.

Ein weiteres Ausführungsbeispiel der externen sicheren Einheit 2, z.B. in Form eines Fingerrings 2, ist, dass der Fingerring 2 die Funktion einer SIM-Karte ausübt. Der Fingerring 2 hat eine Anwendung, welche alle Funktionen einer SIM-Karte ausführt und alle erforderlichen Daten zur Verfügung stellt. Der Fingerring 2 überträgt die erforderlichen Daten über eine kontaktlose Schnittstelle, z.B. eine NFC-Schnittstelle, an ein Kommunikationsgerät 4, z.B. ein Smartphone, das ebenfalls eine kontaktlose Schnittstelle, z.B. eine NFC-Schnittstelle, hat. Die Datenübertragung zwischen Fingerring 2 und Kommunikationsgerät 4 erfolgt optional verschlüsselt. Im Kommunikationsgerät 4 befindet sich eine Anwendung, welche die Daten von dem Fingerring 2 verarbeitet um das Kommunikationsgerät 4 z.B. gegenüber einem Netzbetreiber zu authentisieren. Alternativ können vom Fingerring 2 direkt an einen Netzbetreiber Daten übertragen werden, wobei dabei das Kommunikationsgerät 4 die Daten nur an den Netzbetreiber überträgt, aber nicht weiter verarbeitet. Im Folgenden werden zwei mögliche Anwendungsfälle vorgestellt. Im ersten Fall enthält das Kommunikationsgerät 4, z.B. Mobiltelefon, eine SIM-Karte. Das Kommunikationsgerät 4 frägt dazu über z.B. seine NFC-Schnittstelle ab, ob ein Fingerring 2 vorhanden ist und ob dieser eine SIM-Funktion zur Verfügung stellt. Wenn ein Fingerring 2 mit SIM-Funktion vorhanden ist, dann wird mit den SIM-Daten weitergearbeitet, welche der Fingerring 2 zur Verfügung stellt und nicht mit den SIM-Daten, welche die im Kommunikationsgerät 4 bereits vorhandene SIM-Karte zur Verfügung stellt, man spricht hier von einem sogenannten Subscription switch. Eine Umschaltung zurück auf die im Kommunikationsgerät 4 ursprünglich vorhandene SIM-Karte erfolgt z.B. wenn ein Gespräch oder eine Nutzung beendet wird oder sobald der Fingerring 2 außerhalb der Reichweite der NFC-Schnittstelle des Kommunikationsgeräts 4 ist oder bis die aktuelle Anwendung im Kommunikationsgerät 4 beendet wird oder eine Bildschirmsperre oder andere im Kommunikationsgerät 4 einstellbare Ereignisse aktiv werden. Im zweiten Fall enthält das Kommunikationsgerät 4 keine SIM-Karte. In diesem Fall kann das Kommunikationsgerät 4 nur verwendet werden, wenn der Fingerring 2 im Bereich der NFC-Schnittstelle des Kommunikationsgeräts 4 ist. Solange der Fingerring 2 im Bereich der NFC-Schnittstelle ist, kann die Verwendung des Kommunikationsgeräts 4 z.B. zeitlich befristet oder nur auf eine bestimmte Anwendung begrenzt sein. Ferner kann die Verwendung des Kommunikationsgeräts 4 z.B. für eine bestimmte Anwendung begrenzt werden bis zum Aktivieren von Ereignissen im Kommunikationsgerät 4, z.B. Einschalten einer Bildschirmsperre. Zum Empfangen von Daten oder Gesprächen werden die Daten der SIM des Fingerrings 2 im Kommunikationsgerät 4 gespeichert, so dass auch ohne Vorliegen des Fingerrings 2 mit SIM-Funktion ein Empfang von Daten oder Gesprächen möglich ist. Allerdings können nur bei Vorliegen des Fingerrings 2 mit SIM-Funktion die Daten geöffnet und verarbeitet werden bzw. das Gespräch angenommen werden. Der Vorteil ist, dass Kosten, die durch Nutzung eines Kommunikationsgeräts 4 entstehen, mittels des Fingerrings 2 mit SIM-Funktion personengebunden zugeordnet und gegebenenfalls abgerechnet werden können.

Ein weiteres vorteilhaftes Anwendungsbeispiel der externen sicheren Einheit 2, z.B. in Form eines Fingerrings 2, ist, dass ein elektronisches Ticket über eine kontaktlose Schnittstelle auf den Fingerring 2 übertragen wird. Ein z.B. von einem Server oder Hintergrundsystem erzeugtes elektronisches Ticket, z.B. ein Flugticket, wird von einem Kommunikationsgerät 4 empfangen und von diesem über eine kontaktlose Schnittstelle, z.B. eine NFC-Schnittstelle, an einen Fingerring 2 übertragen. Das elektronische Ticket wird im Fingerring 2 gespeichert. Im Fingerring 2 befindet sich eine Anwendung, welche das elektronische Ticket bei einer Anforderung von außen über eine kontaktlose Schnittstelle, z.B. eine NFC-Schnittstelle überträgt. Die Anwendung auf dem Fingerring 2 simuliert z.B. ein RFID-Tag. In einer vorteilhaften Ausführungsform sind im Fingerring 2 verschiedene Arten von Tickets gespeichert, z.B. Flugticket, Konzertkarte, Karte für den öffentlichen Nahverkehr, wobei jedes Ticket eine eigene Kennung aufweist. Die Kennung und das dazugehörige Ticket werden gemeinsam auf den Fingerring 2 übertragen. Ein einzelnes Ticket wird von einem Leser aufgerufen, indem der Leser die Kennung des Tickets an den Fingerring 2 überträgt. Der Fingerring 2 sendet nach Aufforderung mittels Kennung das entsprechende Ticket an den Leser. Die Kennung ist für jedes Ticket eindeutig und wird z.B. vom Fingerring 2 selbst oder vom Hersteller des Fingerrings 2 vergeben. Beispielsweise können die Kennungen der Tickets in einem Fingerring 2 auch nachträglich durch Aktualisieren von Daten auf dem Fingerring 2 ergänzt oder geändert werden. Ein elektronisches Ticket kann z.B. an einem Verkaufsautomat mit einer kontaktlosen Schnittstelle, z.B. einer NFC-Schnittstelle, käuflich erworben werden und über z.B. die NFC-Schnittstelle auf den Fingerring 2 übertragen werden. Vorteilhaft an diesem Anwendungsbeispiel ist, dass ein elektronisches Ticket auf dem Fingerring 2 gespeichert ist und somit ohne Netzwerkanbindung auf dem Fingerring 2 zur Verfügung steht und darüber hinaus von dem Fingerring 2 an ein Lesegerät mit geeigneter kontaktloser Schnittstelle übertragen werden kann.

In einem weiteren Anwendungsbeispiel der externen sicheren Einheit 2, z.B. in Form eines Fingerrings 2, wird die Funktion einer Karte für Anwendungen zum Bezahlen auf die externe sichere Einheit 2, z.B. den Fingerring 2 übertragen. Ferner kann eine Anwendung zum Bezahlen durch die externe sichere Einheit 2, z.B. den Fingerring 2 abgesichert werden, wobei die externe sichere Einheit 2 getrennt ist von einem mobilen Kommunikationsgerät 4, z.B. Mobiltelefon, mit dem die externe sichere Einheit 2 z.B. über eine kontaktlose Schnittstelle kommunizieren kann. Vorzugsweise wird ein Fingerring 2 verwendet, welcher mindestens eine kontaktlose Schnittstelle aufweist und der eine Funktion für Zahlungsanwendungen aufweist. Es können mehrere sogenannte Banking- oder Payment-Anwendungen von dem Fingerring 2 ausgeführt werden. Die einzelnen Anwendungen werden über sogenannte Application Identifier, abgekürzt AID, ausgewählt. Die einzelnen Anwendungen können z.B. von einem Hersteller oder Anbieter des Fingerrings 2 auf diesem gespeichert werden oder ein Benutzer kann sich die gewünschte Anwendung über einen sogenannten Appstore herunterladen. Die Verbindung zu einem Appstore kann z.B. über ein mobiles Kommunikationsgerät 4 hergestellt werden, mit dem der Fingerring 2 über z.B. eine NFC-Schnittstelle verbunden ist. Falls in dem Fingerring 2 mindestens zwei Anwendungen zum Bezahlen gespeichert sind, dann kann eine bevorzugte Anwendung zum Bezahlen festgelegt werden, wenn z.B. der Fingerring 2 nicht mit dem Kommunikationsgerät 4 über z.B. eine NFC-Schnittstelle verbunden ist bzw. eine Auswahl einer Anwendung zum Bezahlen über ein Auswahlmenü nicht möglich ist. Falls der Fingerring 2 z.B. alleine ohne Kommunikationsgerät 4 an einem Geldautomaten eingesetzt wird, dann wird entweder die bevorzugte Anwendung verwendet oder auf einer Anzeige des Geldautomaten werden die auf dem Fingerring 2 zur Verfügung stehenden Anwendungen angezeigt, wobei über den Geldautomaten die zu verwendende Anwendung ausgewählt werden kann. Optional findet nach der Auswahl einer Anwendung eine PIN- oder Passwort-Abfrage statt. Dabei kann es sich z.B. um eine einheitliche PIN für den Fingerring 2 oder eine anwendungsspezifische PIN handeln. Während der Verwendung von Anwendungen zum Bezahlen kann zur Sicherheit die Verwendung anderer Anwendungen im Fingerring 2 unterbunden oder eingeschränkt werden. Beispielsweise können nur bestimmte Anwendungen während der Verwendung einer Anwendung zum Bezahlen eingeschränkt verwendet werden. Mindestens eine Anwendung zum Bezahlen kann ein One Time Password, abgekürzt OTP, oder eine Transaktionsnummer, abgekürzt TAN, erzeugen, welche zum Bezahlen verwendet wird. Zur Verwendung des Fingerrings 2 für Anwendungen zum Bezahlen muss auf dem dazu gehörenden Kommunikationsgerät 4, welches über eine kontaktlose Schnittstelle, z.B. NFC, mit dem Fingerring 2 kommuniziert, eine geeignete Anwendung gestartet werden, welche über die kontaktlose Schnittstelle eine Kommunikationsverbindung mit dem Fingerring 2 aufbaut. Optional kann beim Starten der Anwendung auf dem Kommunikationsgerät 4 eine Passwortabfrage erfolgen. Nach einem Aufbau einer Kommunikationsverbindung zwischen Fingerring 2 und Kommunikationsgerät 4 werden auf einer Anzeige des Kommunikationsgeräts 4 alle auf dem Fingerring 2 vorhandenen Anwendungen zum Bezahlen zur Auswahl angezeigt. Im Kommunikationsgerät 4 werden keine sicherheitsrelevanten Daten, wie z.B. persönliche Daten eines Benutzers oder Daten betreffend eine Bank gespeichert. Die Anwendung auf dem Kommunikationsgerät 4 zum Aufbau einer Kommunikationsverbindung zum Fingerring 2 wird entweder zeitlich befristet oder nur solange ausgeführt, wie sich der Fingerring 2 im Lesebereich des Kommunikationsgeräts 4 befindet. Die Anwendung im Kommunikationsgerät 4 zum Aufbau einer Kommunikationsverbindung zum Fingerring 2 kann an einen bestimmten Fingerring 2 gebunden werden, indem z.B. vor dem Start der Anwendung eine Identifikationsnummer des Fingerrings 2, eine Seriennummer des Chips des Fingerrings 2 oder ein Application Identifier einer Anwendung überprüft wird. Ferner kann festgelegt werden, dass eine Anwendung zum Bezahlen, die auf dem Fingerring 2 gespeichert ist, nur in Verbindung mit einem bestimmten Kommunikationsgerät 4, z.B. Mobiltelefon, das sich z.B. mittels seiner International Mobile Station Equipment Identity, abgekürzt IMEI, authentisiert, ausgeführt wird. Vorteilhaft an diesem Anwendungsbeispiel ist, dass ein sicheres und einfaches Bezahlen mittels des Fingerrings 2 ermöglicht wird.

Ein weiteres Anwendungsbeispiel der externen sicheren Einheit 2 in Form z.B. eines Fingerrings 2 ist eine Überprüfung des Alters eines Benutzers des Fingerrings 2. In einem Speicher des z.B. am Körper getragenen Fingerrings 2 wird beispielsweise bei der Personalisierung des Fingerrings 2 das Geburtsdatum des Benutzers gespeichert und z.B. von einer ausgebenden Stelle des Fingerrings 2, z.B. ein Hersteller des Fingerrings 2 zusätzlich mittels einer Signatur bestätigt. Nach Bedarf kann das Alter des Benutzers des Fingerrings 2 abgefragt werden, um z.B. bestimmte Anwendungen oder Dienste, welche eine Altersverifikation erfordern, frei zu geben. Die Abfrage erfolgt z.B. über eine kontaktlose Schnittstelle, z.B. eine NFC-Schnittstelle, des Fingerrings 2. Der Fingerring 2 kann als Ausgabewert z.B. ein wirkliches Alter bzw. das Geburtsdatum ausgeben oder er kann auch ausgeben, ob eine Person älter als ein bestimmtes Alter ist, z.B. ob ein Benutzer älter als 18 Jahre ist. Die Prüfung eines Alters eines Benutzers kann z.B. an Automaten für Zigaretten oder im Internet verwendet werden. Zu Beginn eines Verfahrens zur Überprüfung des Alters eines Benutzers mit Fingerring 2 findet eine Authentisierung zwischen einem Kommunikationsgerät 4, z.B. einem Server, Mobiltelefon oder Terminal, und dem Fingerring 2 z.B. mittels einer kontaktlosen Kommunikation, z.B. gemäß NFC, statt. Anschließend frägt das Kommunikationsgerät 4 das Alter des Benutzers ab. Die Abfrage kann so aufgebaut sein, dass sie Angaben zum Application Identifier der abfragenden Anwendung, das abzufragende Geburtsdatum oder ob der Benutzer älter als ein bestimmtes Alter ist, eventuell einen ersten Zufallswert, eine Identifikationsnummer des Terminals und eine Signatur enthält. Eine Antwort des Fingerrings 2 kann beispielsweise so aufgebaut sein, dass sie aus einer XOR-Verknüpfung, bestehend aus dem ersten Zufallswert und dem Alter, und gegebenenfalls aus einer Identifikationsnummer des Fingerrings 2 und einer Signatur besteht. Nach Empfang der Antwort des Fingerrings 2 kann das Kommunikationsgerät 4 das Alter des Benutzers berechnen und entsprechend z.B. einen gewünschten Dienst freigeben. Alternativ kann die Überprüfung des Alters auch mittels eines zentralen Rechners z.B. via Internet erfolgen, wobei mittels z.B. einer Identifikationsnummer des Fingerrings 2 das Alter eines Benutzers bestimmt wird. Ferner kann die Bestimmung des Alters auch direkt vom Fingerring 2 durchgeführt werden, so dass der Fingerring nur ein Ergebnis an ein Kommunikationsgerät 4 übertragt. Vorteilhaft an diesem Anwendungsbeispiel ist, dass es sich um eine sichere und immer verfügbare Altersverifikation für z.B. Dienste im Internet oder an Automaten handelt.

Ein weiteres Anwendungsbeispiel der externen sicheren Einheit 2, z.B. in Form eines Fingerrings 2 ist die Verwendung des Fingerrings 2 als Pass- bzw. Ausweisdokument. Der Fingerring 2 als Pass- bzw. Ausweisdokument kann anstelle oder in Ergänzung zu einem herkömmlichen Pass- bzw. Ausweisdokument verwendet werden. Neben persönlichen Daten, wie Name, Adresse, Foto können z.B. auch biometrische Daten auf dem Fingerring 2 bzw. in dessen Speicher gespeichert werden. In Abhängigkeit von unterschiedlichen Zugriffsrechten für z.B. staatliche Stellen wie z.B. die Polizei verschiedener Nationen, kann ein Zugriff auf unterschiedliche abgespeicherte Daten geregelt werden. Angefragte Daten werden beispielsweise über eine NFC-Schnittstelle des Fingerrings 2 übertragen. Ferner kann im Speicher des Fingerrings 2 auch mindestens ein Visum abgespeichert werden. Ein Visum kann mit einer geeigneten Anwendung aus dem Speicher des Fingerrings 2 abgerufen werden. Die dazu notwendige Anwendung kann eine international einheitliche Anwendung oder eine landesspezifische Anwendung sein. Das Visum wird z.B. über eine kontaktlose Schnittstelle des Fingerrings 2 in den Speicher des Fingerrings 2 geschrieben. Dazu wird das Visum von einem Server über ein mobiles Netzwerk, z.B. Mobilfunknetz, an ein Kommunikationsgerät 4 übertragen, welches das Visum über z.B. eine NFC-Verbindung an den Fingerring 2 überträgt. Alternativ kann das Visum auch direkt über z.B. eine NFC-Verbindung an den Fingerring 2 übertragen werden, wenn z.B. der Fingerring 2 sich in einem Lesebereich eines entsprechenden Servers befindet. Das Visum kann auf demselben Weg personalisiert werden, wie es auch auf den Fingerring 2 übertragen worden ist. Als Alternative zu einem bisher üblichen Pass- oder Ausweisdokument kann ein entsprechender Fingerring 2 als Kopie oder als zusätzliche Ausgabe des Pass- oder Ausweisdokuments hergestellt werden. Sobald die Daten auf dem Fingerring 2, z.B. Daten eines Pass- oder Ausweisdokuments oder eines Visums, von einer ausgebenden Stelle, z.B. öffentliche Behörde, welche Ausweisdokumente ausgibt, bestätigt sind, kann der Fingerring 2 mit den Daten an einen Benutzer ausgegeben werden. Das Übertragen von Daten auf den Fingerring 2 kann z.B. von einem Server über ein Mobilfunknetzwerk an das Kommunikationsgerät 4 und von dem Kommunikationsgerät 4 über eine z.B. NFC-Schnittstelle an den Fingerring 2 erfolgen. Alternativ können die zu übertragenden Daten direkt über z.B. eine NFC-Schnittstelle von einem Terminal an den Fingerring 2 übertragen werden. Die Personalisierung der übertragenen Daten erfolgt wie vorher beschrieben, z.B. über ein Mobilfunknetzwerk oder direkt an einem Terminal. Neben direkt im Fingerring 2 gespeicherten Daten können die Daten z.B. zur Beschleunigung einer Ausgabe bzw. Anzeige auch als Link auf einen gesicherten Speicher im Internet, sogenannte Cloud, abgespeichert werden. Die Daten zwischen Fingerring 2 und dem gesicherten Speicher im Internet müssen gegebenenfalls synchronisiert werden bzw. kann ein Vergleich von z.B. Hash-Werten die Richtigkeit von anzuzeigenden Daten bestätigen.

Ein weiteres Anwendungsbeispiel der externen sicheren Einheit 2 in z.B. der Form als Fingerring 2 ist eine Erzeugung von Zufallszahlen damit z.B. ein Benutzer des Fingerrings 2 als ein Teilnehmer an einem Glücksspiel teilnehmen kann. Dazu ist im Fingerring 2 ein Zufallszahlengenerator angeordnet. Die Länge der erzeugten Zufallszahlen kann je nach Vorgabe angepasst werden und ist variabel. Die erzeugte Zufallszahl kann aus mehreren Ziffern bestehen und optional ziffernweise erzeugt werden. Die Erzeugung einer Zufallszahl wird auf Anforderung eines Benutzers mittels einer in einem Kommunikationsgerät 4, z.B. Mobiltelefon angeordneten Anwendung gestartet, wobei das Kommunikationsgerät 4 über eine kontaktlose Schnittstelle, z.B. eine NFC-Schnittstelle mit dem Fingerring 2 verbunden ist. Die Ausführung der Anwendung zur Erzeugung einer Zufallszahl kann optional mit einer Bezahlfunktion verbunden sein, so dass für jede erzeugte Zufallszahl ein Gebühr zu bezahlen ist. Eine erzeugte Zufallszahl kann von dem Fingerring 2 z.B. über das Kommunikationsgerät 4 an einen Server übertragen werden, wobei ein Server von mehreren Fingerringen 2 erzeugte Zufallszahlen empfangen kann. Bei der Übertragung zwischen Fingerring 2 und Kommunikationsgerät 4 bzw. zwischen Kommunikationsgerät 4 und Server werden gesicherte Verbindungen verwendet. Dem Server ist z.B. selbst ein externe sichere Einheit 2 zugeordnet, welche z.B. eine Master-Zufallszahl erzeugt. Die externe sichere Einheit 2 erzeugt die Master-Zufallszahl in Abhängigkeit von einer vorgegebenen Zeitdauer, z.B. einmal täglich oder einmal wöchentlich, oder in Abhängigkeit von der Anzahl der Teilnehmer, welche jeweils Zufallszahlen an den Server senden. Die vom Server empfangenen Zufallszahlen werden jeweils mit der Master-Zufallszahl verglichen. Bei einer Übereinstimmung von einer empfangenen Zufallszahl mit der Master-Zufallszahl erhält der entsprechende Teilnehmer einen Gewinn. Der Teilnehmer wird z.B. mittels einer Anwendung auf dem Kommunikationsgerät 4 von seinem Gewinn informiert.

Ein weiteres Anwendungsbeispiel der externen sicheren Einheit 2, z.B. in Form eines Fingerrings 2 ist eine Authentisierung des Fingerrings 2 bzw. dessen Benutzers gegenüber einem Kommunikationsgerät 4, wie z.B. einem Terminal oder einer Tastatur. Wie oben beschrieben, weist der Fingerring 2 mindestens ein Chipmodul 10 und eine Antennenspule 8 als kontaktlose Schnittstelle auf. Sobald sich der Fingerring 2 in einem Lesebereich des Kommunikationsgeräts 4 befindet, wird eine Kommunikationsverbindung, z.B. eine NFC-Verbindung, zwischen dem Fingerring 2 und dem Kommunikationsgerät 4 aufgebaut, damit sich z.B. der Fingerring 2 gegenüber dem Kommunikationsgerät 4 authentisieren kann. Um eine möglichst gute Kommunikationsverbindung aufzubauen, muss eine kontaktlose Schnittstelle des Kommunikationsgeräts 4 so ausgebildet sein, dass der Fingerring 2 schnell und zuverlässig in möglichst jeder Position erkannt wird. Dazu ist es vorteilhaft, wenn das Kommunikationsgerät 4 eine ringförmige Antennenspule 8 aufweist, welche z.B. entlang des Gehäuses, z.B. einer Tastatur verlegt ist. Ferner können im Kommunikationsgerät 4 mindestens zwei Antennen, z.B. in der Form eines Rings oder eines Toroids, so verschaltet sein, dass die Kommunikationsverbindung zum Fingerring 2 schnell und zuverlässig aufgebaut wird. Vorteilhaft können die mindestens zwei Antennen unter einer Tastatur des Kommunikationsgeräts 4 angeordnet sein, so dass z.B. das Kommunikationsgerät 4 gesperrt wird, sobald erkannt wird, dass der Fingerring 2 den Lesebereich des Kommunikationsgeräts 4 verlassen hat. Alternativ zu den oben genannten Antennenformen können auch sogenannte Helmholtz-Spulen verwendet werden, um z.B. ein gleichmäßiges elektromagnetisches Feld zu erhalten. Darüber hinaus sind beliebige andere geeignete Antennenformen, Antennenkombinationen und Koppellagen möglich. Der Fingerring 2 wird über das elektromagnetische Feld der mindestens einen Antennenspule mit Energie versorgt. Als Kommunikationsprotokoll kann z.B. NFC, WLAN, Bluetooth oder jedes andere geeignete Protokoll, insbesondere kontaktlose Kommunikationsprotokoll verwendet werden. Vorteilhaft ist, dass ein Benutzer leicht erkannt wird, sobald sich der Fingerring 2 des Benutzers im Lesebereich des Kommunikationsgeräts 4 befindet und sich damit gegenüber dem Kommunikationsgerät 4 authentisiert.

Ein weiteres vorteilhaftes Ausführungsbeispiel für eine externe sichere Einheit 2, z.B. in Form eines M2M-Moduls für Fahrzeuge, ist eine kontaktlose Schnittstelle, z.B. eine NFC-Schnittstelle, zum Lesen und Schreiben von Daten auf einem M2M-Modul zu integrieren. Neben den üblichen ISO-7816-Kontakten eines M2M-Moduls sollen die Antennenkontakte z.B. LA und LB über die ISO-Kontakte C4 und C8 eines entsprechenden Dual-Interface-Chips nach außen geführt werden. An die Modulkontakte C4 und C8 soll dann z.B. eine NFC-Antenne angeschlossen werden. Die NFC-Antenne kann beispielsweise als Teil einer Schaltung auf einer Platine z.B. eines GSM-Modems realisiert werden. Optional kann die Reichweite der Antenne bzw. mögliche Leitungsverluste gegebenenfalls auch mittels einer Verstärkerschaltung oder einer Schaltung zur aktiven Lastmodulation vergrößert werden. Optional kann eine Schaltung zum Schutz vor Überspannung, welche z.B. von einem Leser ausgehen kann, integriert sein. Optional kann die NFC-Antenne als externe Antenne realisiert sein und außerhalb des Gehäuses des M2M-Moduls liegen. In diesem Fall ist die Antenne vorzugsweise z.B. mittels einer Leitung an entsprechenden Kontakten des M2M-Moduls angeschlossen. Für Fahrzeuge kann die Antenne z.B. an der Innenseite der Frontscheibe angeordnet sein, ohne dass das M2M-Modul an der Frontscheibe angeordnet sein muss. Für einen intelligenten Zähler für Energie, einen sogenannten Smart Meter, für z.B. Strom oder Gas kann die Antenne z.B. an einer von außen zugänglichen Position des Zählergehäuses angebracht sein oder über eine Leitung mit einer externen Antenne verbunden sein, welche sich z.B. in einer Wohnung befindet, wobei sich das Smart Meter z.B. im Keller befindet. Vorteilhaft ist, dass M2M-Module mit einer alternativen Schnittstelle, z.B. einer NFC-Schnittstelle, zur Verfügung gestellt werden, welche ein kontaktloses Auslesen von Daten aus dem M2M-Modul bzw. die Kommunikation damit ermöglichen.

Ein weiteres Anwendungsbeispiel der externen sicheren Einheit 2 ist die Verwendung der externen sicheren Einheit 2 als elektronischer Fahrzeugschein. Vorteilhafterweise kann der elektronische Fahrzeugschein aus der Ferne verwaltet werden. Die externe sichere Einheit 2 ist dazu beispielsweise ein sogenanntes M2M-Modul, welches z.B. in einem Fahrzeug angeordnet ist. Wie oben diskutiert, kann zwischen dem M2M-Modul und einem Kommunikationsgerät 4, z.B. ein Mobiltelefon oder ein PC oder ein Notebook, welche einen Zugang zu einem Mobilfunknetzwerk oder zum Internet haben, eine kontaktlose Verbindung, z.B. eine NFC-Verbindung, aufgebaut werden. Zwischen dem Kommunikationsgerät 4 und einem Server oder Hintergrundsystem besteht ebenfalls eine Kommunikationsverbindung z.B. über ein Mobilfunknetz oder über das Internet. Optional kann z.B. zwischen dem Server und dem M2M-Modul im Fahrzeug eine gesicherte Verbindung aufgebaut werden, wobei das Fahrzeug über ein geeignetes Kommunikationsgerät verfügen muss, welches eine Verbindung zwischen Server und M2M-Modul herstellt. Die gesicherte Verbindung kann z.B. mittels einer dem Fahrzeug zugeordneten MSISDN bzw. IPv6 sowie gegebenenfalls in Kombination mit kryptologischen Schlüsseln hergestellt werden. Der Schlüssel ist z.B. auf dem M2M-Modul vorhanden und kann z.B. von einer Zulassungsstelle nach erfolgreicher Authentisierung verwendet werden um die Daten des Fahrzeugscheins zu verändern. Auf den Speicher des M2M-Moduls kann sowohl schreibend als auch lesend zugegriffen werden. Falls das M2M-Modul z.B. personalisiert werden soll, kann z.B. ein Trusted Service Manager, abgekürzt TSM verwendet werden. Vor einem Zugriff auf den Speicher des M2M-Moduls muss sich z.B. der Server einer Zulassungsstelle zuerst authentisieren, um z.B. im Falle einer Zulassung oder einer Änderung der Zulassung des Fahrzeugs die Daten des Fahrzeugscheins im M2M-Modul entsprechend zu ändern. Dazu werden zur Überprüfung des Fahrzeugs z.B. als erstes Daten über das Fahrzeug aus dem Speicher des M2M-Moduls ausgelesen. Daten über das Fahrzeug können z.B. sein Typ, Herstellungsdatum, Leistung, Motortyp, Schaltung, Farbe, Bereifung, evtl. Signatur einer die Personalisierung des M2M-Moduls durchführenden Instanz, z.B. ein TSM beispielsweise bei der Herstellung des Fahrzeugs. Anschließend werden nach erfolgreicher Überprüfung des Fahrzeugs zulassungsspezifische Daten vom Server der Zulassungsstelle in das im Fahrzeug angeordnete M2M-Modul gespeichert. Zulassungsspezifische Daten können z.B. ein amtliches Kennzeichen, Zulassungstag, Zulassungsstelle, TÜV, Abgasuntersuchungswerte, Versicherungsdaten oder eine elektronische Signatur einer Zulassungsstelle sein. Der bisherige Fahrzeugschein kann optional zusätzlich als Papierdokument oder als ein elektronischer Fahrzeugschein z.B. in Form einer Smartcard ausgestellt werden. In einem weiteren vorteilhaften Ausführungsbeispiel besteht die Möglichkeit die Daten des Fahrzeugscheins aus dem M2M-Modul mittels z.B. einer NFC-Verbindung auszulesen. Dafür kann das M2M-Modul optional eine NFC-Antenne aufweisen. Die Menge der ausgelesenen Daten kann von einer Authentisierung eines auslesenden Geräts abhängig gemacht werden. Beispielsweise kann die Polizei Kommunikationsgeräte 4 verwenden, welche sich gegenüber dem M2M-Modul authentisieren, um am Fahrzeug alle Daten des Fahrzeugscheins auszulesen, wobei sich das Kommunikationsgerät 4 der Polizei außerhalb des Fahrzeugs befindet. Falls die Daten des M2M-Moduls ohne Authentisierung ausgelesen werden, kann z.B. nur das amtliche Kennzeichen ausgegeben werden, d.h. es werden keine personenspezifischen Daten ausgegeben. Vorteilhaft an einem elektronischen Fahrzeugschein in der oben dargestellten Weise ist, dass der elektronische Fahrzeugschein aus der Ferne von z.B. einer Zulassungsstelle verändert werden kann. Ferner kann z.B. die Polizei direkt am Fahrzeug auch in Abwesenheit eines Fahrers die Daten des Fahrzeugscheins auslesen.

Ein weiteres Anwendungsbeispiel für eine externe sichere Einheit 2 in Form eines M2M-Moduls in einem Fahrzeug ist der Einsatz des M2M-Moduls für einen elektronischen Parkschein bzw. eines Schreibens und Lesens eines elektronischen Parkscheins in bzw. aus dem M2M-Modul. Wie oben beschrieben, ist das M2M-Modul mittels z.B. einer NFC-Schnittstelle mit einem Kommunikationsgerät 4, z.B. ein Mobiltelefon oder ein Terminal verbunden. Mittels einer Anwendung auf dem Kommunikationsgerät 4 kann z.B. für ein auswählbares Fahrzeug für einen bestimmten Ort innerhalb einer bestimmten Zeit ein elektronischer Parkschein erstellt werden, welches im M2M-Modul gespeichert wird. Der Ort kann z.B. ein aktueller oder ein auswählbarer Ort, z.B. mittels GPS sein. Das Fahrzeug kann z.B. mittels Kennzeichen ausgewählt werden. Die Anwendung im Kommunikationsgerät 4 sendet die vorher genannten Daten über eine Kommunikationsverbindung z.B. über ein Mobilfunknetz z.B. an einen Server, welcher die Daten hinsichtlich des Parkscheins bearbeitet. Nach Bearbeitung und Bezahlung sendet der Server den elektronischen Parkschein an das Kommunikationsgerät 4 zurück. Das Kommunikationsgerät 4 speichert den Parkschein im M2M-Modul ab. Gegebenenfalls erscheint auf einer Anzeige des Kommunikationsgeräts 4 eine Bestätigung, dass der Parkschein bezahlt und empfangen wurde. Die Bezahlung kann über das Kommunikationsgerät 4 z.B. mittels Kreditkarte oder anderer mobiler Bezahlfunktionen erfolgen. Das Anfordern eines Parkscheins kann auch aus der Ferne erfolgen, indem gegebenenfalls eine z.B. aktuelle oder zukünftige Position des Fahrzeugs z.B. mittels GSM oder GPS vom Kommunikationsgerät 4 z.B. auf Veranlassung des M2M-Moduls oder des Benutzers abgefragt oder von einem Benutzer eingegeben wird oder entsprechend in einem angezeigten Menü des Kommunikationsgeräts 4 ausgewählt wird oder auch ohne genaue Ortsinformation angefordert wird. Das Anfordern eines Parkscheins kann auch zeitversetzt erfolgen, indem eine Gültigkeit, z.B. eine Startzeit oder eine bestimmte Parkdauer, mittels einer Anzeige des Kommunikationsgeräts 4 ausgewählt wird. Optional kann die Parkdauer auf einer Anzeige des Kommunikationsgeräts 4 optisch dargestellt werden. Vor Ablauf der Parkdauer kann optional eine Erinnerung auf der Anzeige des Kommunikationsgeräts 4 erfolgen. Eine Gültigkeit eines vorhandenen Parkscheins kann durch Nachzahlen verlängert werden, indem der vorhandene Parkschein durch einen neuen Parkschein ersetzt wird. Im M2M-Modul kann mindestens ein Parkschein abgespeichert werden. Ein Auslesen eines Parkscheins von außerhalb des Fahrzeugs erfolgt mittels z.B. einer NFC-Schnittstelle eines Kommunikationsgeräts 4. Das Kommunikationsgerät 4 mit einer NFC-Schnittstelle z.B. der Polizei liest den im M2M-Modul gespeicherten Parkschein aus und prüft dessen Gültigkeit. Falls im M2M-Modul kein gültiger Parkschein vorliegt, kann z.B. unmittelbar vor Ort ein elektronischer Strafzettel erzeugt und im M2M-Modul abgespeichert werden. Optional kann der elektronische Strafzettel vom M2M-Modul an das Kommunikationsgerät 4 des Fahrers übertragen werden. Der Parkschein kann beispielsweise eine durch einen Signaturschlüssel eines Servers einer Ausgabestelle für Parkscheine erstellte elektronisch signierte Datei sein, welche Informationen z.B. zum Fahrzeug, Ort und Zeit enthält. Beim Auslesen des Parkscheins kann die Signatur entsprechend leicht überprüft werden, sofern beim Lesegerät ein entsprechender öffentlicher Signaturschlüssel vorhanden ist. Vorteilhaft ist, dass es sich um ein einfach zu implementierendes Verfahren für elektronische Parkscheine handelt, wobei mindestens ein Parkschein optional aus der Ferne auf ein Fahrzeug übertragen werden kann und am Fahrzeug z.B. mittels einer NFC-Verbindung von z.B. der Polizei ausgelesen werden kann.

Ein weiteres Anwendungsbeispiel für eine externe sichere Einheit 2, z.B. ein Fingerring 2, ist eine Überprüfung eines gültigen Führerscheins sowie einer gültigen KFZ-Versicherung sowie persönlicher Einschränkungen. In einer externen sicheren Einheit 2 z.B. in Form eines oben beschriebenen Fingerrings 2, wird eine Datei gespeichert, welche Informationen zum Führerschein sowie zur KFZ-Versicherung des Benutzers des Fingerrings 2 enthält. Die Datei wird durch eine vertrauenswürdige Instanz, z.B. TSM, oder eine Behörde erstellt oder geändert. Das Schreiben oder Ändern von Daten der Datei kann nur nach vorheriger Authentisierung und Prüfung von Schreibrechten erfolgen. Die gegen einen nicht authorisierten Zugriff geschützte Datei kann z.B. Angaben zum Benutzer des Fingerrings 2, dessen Führerschein und dessen Versicherung enthalten. Als Angaben zum Benutzer werden z.B. Name, Vorname, Geburtsname, Wohnort gespeichert. Als Angaben zum Führerschein werden z.B. die Führerscheinklassen, Datum, wann die einzelnen Führerscheine erworben wurden, ausstellende Behörde, mögliche Einschränkungen und evtl. zeitlich beschränkte Gültigkeit einer Führerscheinklasse gespeichert. Als Angaben zur Versicherung werden z.B. Fahrzeugklassen mit Haftpflicht- oder Vollkaskoversicherung, Versicherungsschutz z.B. für den Wert eines Fahrzeugs, Leistungsbeschränkungen, z.B. bis 100 PS, Geschwindigkeitsbegrenzungen, z.B. bis 120 km/h oder gegebenenfalls zeitliche Beschränkungen, z.B. Fahren ist nur zwischen 10.00 und 17.00 Uhr erlaubt, wegen eines geringeren Unfallrisikos, gespeichert. Optional wird die Datei regelmäßig, z.B. einmal monatlich, aktualisiert, um Änderungen z.B. des Führerscheins oder des Versicherungsschutzes zu erfassen. Dies kann z.B. automatisiert erfolgen, sobald der Fingerring 2 z.B. mittels einer NFC-Verbindung mit einem Kommunikationsgerät 4, z.B. einem Mobiltelefon über z.B. das Internet mit einer die Daten verwaltenden Instanz, z.B. ein TSM verbunden wird. Die im Fingerring 2 gespeicherte Datei wird bei einer Verwendung eines Fahrzeugs z.B. über eine NFC-Schnittstelle ausgelesen und ausgewertet. Eine Nutzung des Fahrzeugs wird unterbunden, indem z.B. der Motor sich nicht starten lässt, sofern z.B. kein gültiger Führerschein für die Fahrzeugklasse oder sofern keine dem Fahrzeug entsprechende gültige Versicherung vorliegt. Dafür werden die Daten des Fahrzeugs, welche z.B. in einem M2M-Modul des Fahrzeugs gespeichert sind, mit den Daten des Fingerrings 2 des Fahrers verglichen und ausgewertet. Der Versicherungsschutz soll an das tatsächlich verwendete Fahrzeug angepasst werden, sogenanntes pay as you drive. Hierzu werden die Daten des verwendeten Fahrzeugs, sowie gegebenenfalls die Dauer einer Fahrt in einer Datei im Fingerring 2 erfasst und später zur Abrechnung an eine Versicherung übermittelt, sobald der Fingerring 2 z.B. mittels dem Kommunikationsgerät 4 mit dem Internet verbunden wird. Das Erfassen und Übermitteln von Daten an die Versicherung kann auch mittels des im Fahrzeug angeordneten M2M-Moduls, wobei dazu auch eine Verbindung zu einem Kommunikationsgerät 4 notwendig ist, geschehen. Das Fahrzeug kann im Notfall dennoch verwendet werden, jedoch erfolgt eine entsprechende Anzeige im Fahrzeug. Der Motor des Fahrzeugs lässt sich für Fahrer mit eingeschränktem Führerschein, z.B. Führerscheinneulinge oder Fahrer unter 18 Jahren, nur starten, wenn eine zweite Person als Beifahrer über seinen Fingerring 2 als Beifahrer identifiziert wurde. Vorteilhafterweise erfolgt die Abfrage des Beifahrers automatisch, sofern mittels des Fingerrings 2 des Fahrers eine Beschränkung erkannt wurde. Die Datei im Fingerring 2 weist optional einen Eintrag hinsichtlich Verkehrsvergehen auf. Abhängig von diesem Eintrag können spezifische Einschränkungen gelten, z.B. für vier Wochen darf mit maximal 100 km/h schnell gefahren werden. Eine Veränderung einer Motorleistung erfolgt z.B. mittels einer Fahrzeugsteuerung, welche z.B. über das im Fahrzeug angeordnete M2M-Modul gesteuert wird. Vorteilhaft ist, dass die Versicherung auf die aktuellen Begebenheiten, z.B. das aktuelle Fahrzeug angepasst wird. Ferner kann eine personenspezifische oder fahrzeugspezifische Wegfahrsperre eingerichtet werden.

Ein weiteres vorteilhaftes Anwendungsbeispiel der externen sicheren Einheit 2, z.B. in der Form eines Fingerrings 2, ist eine Verwendung als Fahrzeugschlüssel, dessen Programmierung über eine kontaktlose Schnittstelle verändert werden kann. Ein Fahrzeug ist z.B. in einer Tür oder im Lenkrad mit einem Kommunikationsgerät 4, z.B. ein Lesegerät für eine NFC-Verbindung ausgestattet, wobei das Kommunikationsgerät 4 ein Erfassen und Authentisieren der Fingerrings 2 ermöglicht. Vorteilhafterweise können mehrere verschiedene Fingerringe 2 zur Verwendung des Fahrzeugs freigegeben werden für z.B. einen Halter des Fahrzeugs und dessen Nutzer. Der Fingerring 2 und das mindestens eine Kommunikationsgerät 4 enthalten Anwendungen, welche zur Authentisierung zwischen Fingerring 2 und Fahrzeug verwendet werden. Das Kommunikationsgerät 4 kann selbst eine externe sichere Einheit 2, z.B. in Form einer SIM-Karte enthalten oder über eine kontaktlose Kommunikationsverbindung, z.B. eine NFC-Verbindung, mit einem M2M-Modul, welches im Fahrzeug angeordnet ist, verbunden sein, oder das Kommunikationsgerät 4 kann ferner z.B. über ein Mobilfunknetz und das Internet mit einem Server verbunden sein. Das M2M-Modul und/oder die SIM-Karte des Kommunikationsgeräts 4 können z.B. aus der Ferne über ein Mobilfunknetz aktualisiert werden. Eine Aktualisierung kann beispielsweise durch einen Hersteller des Kommunikationsgeräts 4 oder des M2M-Moduls oder durch eine von einem Hersteller beauftragte Instanz, z.B. ein TSM durchgeführt werden. Im Fahrzeug kann z.B. ein M2M-Modul angeordnet sein, um Zufallszahlen für ein Verschlüsselungsverfahren zu erzeugen, sowie um digitale Signaturen zu überprüfen, z.B. für ein RSA-Signaturverfahren. Im M2M-Modul befindet sich ferner ein Speicher für eine Liste von öffentlichen Signaturschlüsseln, welche z.B. über ein Mobilfunknetzwerk aktualisiert werden können. Der Fingerring 2 weist entsprechende Anwendungen einschließlich einer Signaturfunktion und entsprechenden privaten und öffentlichen Schlüsseln auf, welche optional der Anwendung zugeordnet werden und somit nicht von anderen Anwendungen verwendet werden können. Die Gültigkeit der Schlüssel kann zeitlich befristet sein. Zur Aktivierung einer Funktion sendet das Fahrzeug beispielsweise einen Application Identifier AID und eine Zufallszahl und eine optionale Signatur an den Fingerring 2. Der Fingerring 2 muss in diesem Fall den öffentlichen Signaturschlüssel kennen bzw. zuvor von dem Kommunikationsgerät 4 übertragen bekommen. Der Fingerring 2 startet eine Anwendung entsprechend der AID und berechnet eine Signatur mittels der Zufallszahl. Der Fingerring 2 sendet die Signatur an das Kommunikationsgerät 4 des Fahrzeugs zurück. Mittels des Kommunikationsgeräts 4 des Fahrzeugs wird die korrekte Signatur anhand des öffentlichen Schlüssels des Fingerrings 2 überprüft, wobei der öffentliche Schlüssel in der Liste des Kommunikationsgeräts 4 des Fahrzeugs gespeichert ist. Entsprechend der Prüfung wird eine Funktion frei gegeben bzw. aktiviert, z.B. Tür öffnen oder verriegeln oder Motor starten. Alternativ wird die Funktion blockiert, gegebenenfalls zeitlich ansteigend mit der Anzahl der Versuche, bzw. abgewiesen sofern der Schlüssel nicht in der Liste enthalten ist. Insbesondere die Funktion "Motor starten" soll nur dann aktiviert werden, nachdem z.B. von dem M2M-Modul des Fahrzeugs ein Freigabecode an eine Motorsteuerung ausgegeben wurde, um z.B. eine elektronische Wegfahrsperre zu deaktivieren. Vorteilhafterweise muss die Antwort von dem Fingerring 2 innerhalb einer bestimmten Zeit, z.B. 2 Sekunden erfolgen. Der Fingerring 2 mit einem entsprechenden Signaturschlüssel des Fahrzeughalters sowie gegebenenfalls mindestens ein weiterer Fingerring 2 sind als zeitlich unbefristete Benutzer in der Liste enthalten. Zudem besteht die Möglichkeit eine Verwendung eines Schlüssels bzw. eine Verwendung des Fahrzeugs nur für eine bestimmte Zeit zu ermöglichen. Dem mindestens einen öffentlichen Signaturschlüssel, welcher z.B. in der Liste im M2M-Modul des Fahrzeugs gespeichert ist, wird eine zeitliche Gültigkeit zugeordnet. Der Zugriff auf das Fahrzeug wird nur innerhalb der zeitlichen Gültigkeit gewährt. Nach Ablauf der Zeit wird der Signaturschlüssel z.B. gelöscht. Die Abfrage der zeitlichen Gültigkeit erfolgt über das im Fahrzeug enthaltene M2M-Modul. Ferner kann eine Verwaltung auch aus der Ferne z.B. über das Kommunikationsgerät 4 erfolgen. Dazu identifiziert sich ein Benutzer des Fingerrings 2 mittels des Kommunikationsgeräts 4. Der öffentliche Signaturschlüssel des Benutzers wird z.B. per SMS an das im Fahrzeug angeordnete M2M-Modul übertragen, gegebenenfalls mit einer zeitlichen Befristung. Der öffentliche Signaturschlüssel wird mit einem Signaturschlüssel des Fahrzeughalters, z.B. als Master, signiert. Eine Änderung der Liste kann nur durch den oder die in der Liste des M2M-Moduls aufgeführten Fahrzeughalter bzw. Master durchgeführt werden. Ein Master kann z.B. durch ein weiteres z.B. nicht aus der Ferne zu veränderndes Flag in der Liste angegeben sein. Der Master kann z.B. nur durch einen Hersteller des Fahrzeugs vorgegeben sein. Das Flag kann z.B. mit dem Wert 1 angeben, dass es sich um einen Master mit Administratorfunktion handelt. Der Wert 0 gibt an, dass es sich um einen Slave mit reinen Nutzerrechten handelt. Optional kann eine Freigabe oder Administration der Nutzer nur in Verbindung mit einem elektronischen Fahrzeugschein, welcher z.B. per NFC-Schnittstelle übertragen wird, erfolgen. In diesem Fall muss beim Ausführen der zur Administration vorgesehenen Anwendung der Fahrzeugschein vorliegen, d.h. es findet eine Authentisierung zwischen dem Fahrzeugschein und der Anwendung statt. Vorteilhaft ist, dass eine individuelle Freigabe einer Nutzung von Fahrzeugen zeitlich befristet wird, ohne dass ein physikalischer Schlüssel vorliegt.

### Bezugszeichenliste

- 2: externe sichere Einheit, z.B. in Form eines Fingerrings
- 4: Kommunikationsgerät mit kontaktloser Schnittstelle, z.B. ein Smartphone oder ein Terminal mit NFC-Schnittstelle
- 6: Kommunikationsverbindung zwischen einer externen sicheren Einheit und einem Kommunikationsgerät
- 8: Antennenspule
- 10: Chipmodul
- 12: Inlett, z.B. mit Chipmodul und Antennenspule
- 14: Abdeckung
- 16: Ringhälfte
- 18: Ringhälfte

## Patentansprüche

1. Verfahren zum Betrieb einer externen sicheren Einheit (2), welche mindestens
- einen Speicher zum Speichern von Daten,
- einen Prozessor zum Verarbeiten der Daten,
- mindestens eine Schnittstelle, um Daten von einem Kommunikationsgerät (4) zu empfangen oder an dieses zu senden, umfasst,
wobei das Kommunikationsgerät (4) mindestens
- einen Speicher zum Speichern mindestens eines Anwendungsprogrammes,
- einen Prozessor zum Verarbeiten und Ausführen des Anwendungsprogrammes,
- mindestens eine erste Schnittstelle, um Daten an die externe sichere Einheit (2) zu senden oder von dieser zu empfangen,
- mindestens eine zweite Schnittstelle, um Daten an ein Übertragungsnetzwerk zu senden oder von diesem zu empfangen, umfasst, wobei
für die Ausführung des Anwendungsprogrammes im Kommunikationsgerät (4) notwendige sicherheitsrelevante Daten in der externen sicheren Einheit (2) gespeichert sind und das Kommunikationsgerät (4) zur Ausführung des Anwendungsprogramms die sicherheitsrelevanten Daten von der externen sicheren Einheit (2) anfordert, wobei die externe sichere Einheit (2) als ein Fingerring bereitgestellt wird, wobei der Fingerring (2) aus mindestens zwei Komponenten besteht, wobei in mindestens eine Komponente eine Elektronikkomponente eingesetzt wird,
wobei die externe sichere Einheit (2) zwei- und/oder dreidimensional angeordnete Antennen zur Kommunikation mit dem Kommunikationsgerät (4) verwendet.

2. Verfahren nach Anspruch 1, **dadurch gekennzeichnet, dass** mindestens einem Anwendungsprogramm in Abhängigkeit von seiner Anwendung eine Sicherheitsstufe zugeordnet wird.

3. Verfahren nach Anspruch 1 oder 2, wobei zwischen dem Kommunikationsgerät (4) und der externen sicheren Einheit (2) Daten kontaktlos übertragen werden.

4. Verfahren nach Anspruch 3, wobei die externe sichere Einheit (2) als Schnittstelle eine NFC-Schnittstelle zur Kommunikation mit dem Kommunikationsgerät (4) verwendet.

5. Verfahren nach einem der Ansprüche 1 bis 4, **dadurch gekennzeichnet, dass** die externe sichere Einheit (2) einen Sensor zur Erfassung von biometrischen Merkmalen verwendet.

6. Verfahren nach einem der Ansprüche 1 bis 5, **dadurch gekennzeichnet, dass** der Fingerring (2) aus einem streifenförmigen Material besteht, wobei das Material zu einem Ring geformt wird.

7. Verfahren nach einem der Ansprüche 1 bis 6, **dadurch gekennzeichnet, dass** ein NFC-Modul in den Ring eingesetzt wird, wobei das NFC-Modul auswechselbar ist.

8. Verfahren nach einem der Ansprüche 1 bis 7, **dadurch gekennzeichnet, dass** als Kommunikationsgerät (4) ein Mobiltelefon verwendet wird.

9. Verfahren nach einem der Ansprüche 1 bis 8, **dadurch gekennzeichnet, dass** als Übertragungssystem ein Mobilfunknetzwerk verwendet wird.

10. Externe sichere Einheit (2) in Form eines Fingerrings, welche eingerichtet ist, um ein Verfahren gemäß den Ansprüchen 1 bis 9 auszuführen.

11. Verfahren zur Herstellung einer externen sicheren Einheit (2) gemäß Anspruch 10.

12. System, welches aus mindestens einer sicheren Einheit (2) gemäß Anspruch 10 und mindestens einem Kommunikationsgerät (4) besteht.

13. System nach Anspruch 12, **dadurch gekennzeichnet, dass** als Kommunikationsgerät (4) ein Mobiltelefon verwendet wird.

## Claims

1. A method for operating an external secure unit (2) which comprises at least
- a memory for storing data,
- a processor for processing the data,
- at least one interface for receiving data from a communication device (4) or sending them thereto,
wherein the communication device (4) comprises at least
- a memory for storing at least one application program,
- a processor for processing and executing the application program,
- at least a first interface for sending data to the external secure unit (2) or receiving them therefrom,
- at least a second interface for sending data to a transmission network or receiving them therefrom,
wherein security-relevant data necessary for executing the application program in the communication device (4) are stored in the external secure unit (2), and the communication device (4) requests the security-relevant data from the external secure unit (2) for executing the application program, wherein the external secure unit (2) is supplied as a finger-ring,
wherein the finger-ring (2) consists of at least two components, with an electronic component being inserted into at least one component,
wherein the external secure unit (2) employs two- and/or three-dimensionally arranged antennas for communication with the communication device (4).

2. The method according to claim 1, **characterized in that** at least one application program is assigned a security level in dependence on its application,

3. The method according to claim 1 or 2, wherein data are transferred contactlessly between the communication device (4) and the external secure unit (2).

4. The method according to claim 3, wherein the external secure unit (2) employs as an interface an NFC interface for communication with the communication device (4).

5. The method according to any of claims 1 to 4, **characterized in that** the external secure unit (2) employs a sensor for capturing biometric features.

6. The method according to any of claims 1 to 5, **characterized in that** the finger-ring (2) consists of a strip-shaped material, with the material being shaped into a ring.

7. The method according to any of claims 1 to 6, **characterized in that** an NFC module is inserted into the ring, with the NFC module being replaceable.

8. The method according to any of claims 1 to 7, **characterized in that** a mobile telephone is employed as a communication device (4).

9. The method according to any of claims 1 to 8, **characterized in that** a mobile radio network is employed as a transmission system.

10. An external secure unit (2) in the form of a finger-ring, which is configured to perform a method according to claims 1 to 9.

11. A method for manufacturing an external secure unit (2) according to claim 10.

12. A system consisting of at least one secure unit (2) according to claim 10 and at least one communication device (4).

13. The system according to claim 12, **characterized in that** a mobile telephone is employed as a communication device (4).

## Revendications

1. Procédé de fonctionnement d'une unité externe sécurisée (2), comprenant au moins
- une mémoire pour la mémorisation de données,
- un processeur pour le traitement des données,
- au moins une interface pour recevoir, de la part d'un appareil de communication (4), des données, ou pour en envoyer à ce dernier,
cependant que l'appareil de communication (4) comprend au moins
- une mémoire pour la mémorisation d'au moins un programme d'application,
- un processeur pour le traitement et l'exécution du programme d'application,
- au moins une première interface pour envoyer à l'unité externe sécurisée (2) des données, ou pour en recevoir de la part de cette dernière,
- au moins une deuxième interface pour envoyer à un réseau de transmission des données ou pour en recevoir de la part de ce dernier, cependant que
pour l'exécution du programme d'application dans l'appareil de communication (4), des données nécessaires touchant à la sécurité sont mémorisées dans l'unité externe sécurisée (2), et que l'appareil de communication (4), pour l'exécution du programme d'application, sollicite de la part de l'unité externe sécurisée (2) les données touchant à la sécurité, cependant que
l'unité externe sécurisée (2) et mise à disposition sous forme d'une bague à doigt,
cependant que la bague à doigt (2) consiste en au moins deux composants, cependant que,
dans au moins un composant, un composant électronique est inséré,
cependant que l'unité externe sécurisée (2) utilise pour la communication avec l'appareil de communication (4) des antennes agencées de manière bidimensionnelle ou tridimensionnelle.

2. Procédé selon la revendication 1, **caractérisé en ce que**, à au moins un programme d'application, un niveau de sécurité est affecté en fonction de son utilisation.

3. Procédé selon la revendication 1 ou 2, cependant que, entre l'appareil de communication (4) et l'unité externe sécurisée (2), des données peuvent être transmises sans contact.

4. Procédé selon la revendication 3, cependant que l'unité externe sécurisée (2) utilise comme interface une interface NFC pour la communication avec l'appareil de communication (4).

5. Procédé selon une des revendications de 1 à 4, **caractérisé en ce que** l'unité externe sécurisée (2) utilise un capteur pour la saisie de caractéristiques biométriques.

6. Procédé selon une des revendications de 1 à 5, **caractérisé en ce que** la bague à doigt (2) consiste en un matériau en ruban, cependant que le matériau est modelé de manière à obtenir une bague.

7. Procédé selon une des revendications de 1 à 6, **caractérisé en ce qu'**un module NFC est inséré dans une bague, cependant que le module NFC est interchangeable.

8. Procédé selon une des revendications de 1 à 7, **caractérisé en ce que**, comme appareil de communication (4), un téléphone mobile est utilisé.

9. Procédé selon une des revendications de 1 à 8, **caractérisé en ce que**, comme système de transmission, un réseau radio mobile est utilisé.

10. Unité externe sécurisée (2) sous forme d'une bague à doigt, conçue pour exécuter un procédé selon une des revendications de 1 à 9.

11. Procédé de fabrication d'un unité externe sécurisée (2) selon la revendication 10.

12. Système consistant en au moins une unité externe sécurisée (2) selon la revendication 10 et en au moins un appareil de communication (4).

13. Système selon la revendication 12, **caractérisé en ce que**, en tant qu'appareil de communication (4), un téléphone mobile est utilisé.
